Europäisches Patentamt

European Patent Office

Office européen des brevets

(19)

(11) Publication number: **0 061 317**
**B1**

(12)                     **EUROPEAN PATENT SPECIFICATION**

(45) Date of publication of patent specification: **07.05.86**

(51) Int. Cl.⁴: **G 01 N 35/04**

(21) Application number: **82301419.6**

(22) Date of filing: **19.03.82**

(54) **Sampling apparatus.**

(30) Priority: **20.03.81 SE 8101788**
**18.11.81 GB 8134706**

(43) Date of publication of application:
**29.09.82 Bulletin 82/39**

(45) Publication of the grant of the patent:
**07.05.86 Bulletin 86/19**

(84) Designated Contracting States:
**CH DE FR IT LI**

(56) References cited:
**DE-A-1 798 354**
**DE-B-2 755 334**
**GB-A-1 353 747**
**US-A-3 614 434**
**US-A-3 853 010**
**US-A-4 120 662**
**US-A-4 155 978**
**US-A-4 168 955**

(73) Proprietor: **COULTER ELECTRONICS, LIMITED**
**Northwell Drive**
**Luton Bedfordshire LU3 3RH (GB)**

(72) Inventor: **Wellerfors, Hans**
**Hagerstensvagen 134**
**126 49 Hagersten (SE)**
Inventor: **Dunstan, Harvey John**
**2 Marshalswick Lane**
**St. Albans Hertfordshire (GB)**
Inventor: **Smith, Alan Timothy Philip**
**7 Mendip Way**
**Luton Bedfordshire (GB)**
Inventor: **Gilbert, Ian David**
**16 Wynchlands Crescent**
**St. Albans Hertfordshire (GB)**

(74) Representative: **Nettleton, John Victor et al**
**Abel & Imray Northumberland House 303-306**
**High Holborn**
**London, WC1V 7LH (GB)**

Courier Press, Leamington Spa, England.

## Description

This invention relates to apparatus for taking a sample quantity of liquid from each of a plurality of containers.

Where the liquid is a liquid suspension, for example blood, which is subject to sedimentation or separation of its components on standing, difficulty arises in obtaining a sample which is representative of the liquid suspension as a whole.

Blood mixing machines are known in which an operator càn place one or more containers for agitation prior to removal of the containers for sampling. Such machines are disadvantageous because of the need for the operator to load and unload the mixing machine in addition to dealing with the taking of samples.

British patent specification 1,237,805 describes a blood analyser comprising a turntable containing a plurality of loosely held receptacle holders into which individual specimen cups loosely fit. The cups are oscillated by means of magnetic pins, extending from the base of the receptacle holders, and a rotating magnetic field in an attempt to keep the blood samples homogeneous. One major disadvantage of this and similar machines is that the use of open containers on a turntable exposes the operator to the risk of contamination and infection from the blood samples.

United States patent specification 4,120,662 describes an apparatus for obtaining samples from a series of closed containers in which a pair of parallel feed screws move the closed containers along a predetermined path to a sampling station. In a mixing mode, the feed screws impart motion to the closed containers while they are moved along the path in an attempt to obtain a substantially uniform distribution of the particles contained in the containers. This machine imparts a mixing motion to the containers individually but the effectiveness of mixing is limited by the motion the feed screws are capable of imparting to the containers. Furthermore, the containers have to be inserted individually into the feed screws and the order in which they are sampled is necessarily the order in which they lie in the feed screws.

US—A—3 614 434 discloses an automatic agitating and sample device including a turntable which rotatably agitates a plurality of randomly positioned vials, each containing a liquid sample. The turntable comprises a wheel 32 secured to output shaft 36 of an electric stepping motor 34 for rotation in a vertical plane. The turntable is automatically indexed to receive a pipette in one of the vials after a predetermined agitation period and an autopippetor withdraws an accurately measured liquid sample. The vials include a cap with an elongated hollow stem, the opening through the elongated stem extending completely through the cap, whereby a dip tube of the autopipettor is permitted to enter to withdraw a portion of the sample.

GB—A—1 353 747 discloses an apparatus for the collection and presentation of fluid samples. The apparatus comprises a motor connected to a drive shaft rotatably supported on trunnions, a carrier supporting twenty-four glass tubes or traps being secured to the shaft for rotation therewith. As the shaft is rotated the twenty-four traps are exposed sequentially to the outside atmosphere which is being surveyed for pollution, the sampling operation being completed in 24 hours.

DE—A—1 798 354 discloses a sampling means for analysis apparatus. The sampling means comprises a spring-mounted table through which a probe passes into a sample vessel when the table is depressed.

DE—B2—2 755 334 discloses an arrangement for use in the automatic analysis of biological fluids. The arrangement includes a movable sample carrier with a series of sample holders arranged in a straight line on the carrier. The arrangement includes a mechanism for indexing the sample carrier.

The present invention provides apparatus for taking a sample of liquid from each of a plurality of containers comprising a receptacle capable of receiving and holding a plurality of said containers, means on the apparatus for receiving and supporting the receptacle and so moving it as to cause the containers held thereon to follow a defined path to a sampling station along the path and to be inverted in moving along said path to cause agitation of liquid in the containers, means for arresting a container at the sampling station with respect to a sampling means arranged to enter such a container, and means for actuating the sampling means to cause it to enter the container and withdraw a sample from the container, characterized in that the receptacle is so mounted as to be readily removable from the apparatus, in that the apparatus is for taking a sample of liquid from each of a plurality of containers sealed by a piercable stopper, and in that the sampling means is arranged to pierce the stopper of such a container.

Preferably, the receptacle is a circular carrier having means for receiving and locating the plurality of containers thereon spaced circumferentially round said carrier, and the receiving and supporting means is arranged to rotate the carrier so that the containers move generally in a plane which is at a substantial angle to the horizontal. Advantageously, the said angle is not less than 30°.

Preferably, the carrier is capable of receiving containers which are elongate in shape and have an opening at one end, and so to locate the containers that they lie approximately in a common plane, and, on rotation of the carrier, follow a defined path of movement which lies in the said plane.

Preferably, the carrier is such that, when the containers are held on it, they are disposed approximately radially and with the ends with the said openings outermost.

Preferably the carrier is arranged to receive containers which are elongate in shape and to locate said containers each at an angle to the general plane of said carrier.

The present invention also provides apparatus for taking a sample of liquid from each of a plurality of containers, comprising receptacle means capable of receiving and holding a plurality of said containers, means on said apparatus for receiving and supporting the receptacle means and for moving it to cause the containers each to follow a defined path to a sampling station along the path and to be inverted moving along the path to cause agitation of the liquid in the containers, means for arresting a container with respect to sampling means, arranged to enter such a container, at the sampling station and means for actuating the sampling means to enter the container and withdraw a sample from the container, characterized in that the receptacle means comprises a plurality of receptacles each arranged to receive and hold a plurality of the containers, in that the receptacles are so mounted as to be readily removable from the apparatus, in that the apparatus is for taking a sample of liquid from each of a plurality of containers sealed by a piercable stopper, and in that the sampling means is arranged to pierce the stopper of such a container.

An embodiment of the present invention comprises an apparatus for taking a sample from each of a plurality of containers in which test tubes are mounted about the periphery of a cassette, which preferably is rotatable in the vertical plane and drivingly connected to a motor via a gear set, clutch and brake, in such a manner, that the cassette rotates for maintaining the liquids in the test tubes thoroughly mixed and is capable of being stopped by disengagement of the clutch, and the cassette is locked in accurate position in front of a sampling needle by means of a brake, which takes place when a signal from an analysis instrument orders and electronic counting mechanism to calculate the test tube in question and stop the cassette, and immediately by means of a pneumatic cylinder lowers an arm fixing the test tube in question, and by means of a second pneumatic cylinder also lowers a sampling needle and thereby perforates the closure of the test tube, in such a manner, that the sampling needle is lowered to a definite position and after having arrived at this position effects a signal to the analysis instrument, which sucks a definite liquid amount, draws the sampling needle upward, lifts the arm, releases the brake, engages the clutch and takes along the cassette, which now again starts to rotate.

The cassette preferably is circular, with a circumferential surface being in parallel with the axis of rotation of the cassette, and with test tubes mounted radially in the cassette and extending from the circumferential surface.

The mixing can be still more efficient when the circumferential surface entirely or partially is beveled, preferably with a bevel angle of 45°, and the test tubes are mounted in the beveled surface directed at an angle of 45° to the axis of rotation.

The same effective mixing can be obtained, when the circumferential surface of the cassette still is in parallel with the drive axle and the test tubes point straight inward to the centre of the cassette, and the angle between the longitudinal axis of the test tubes and the axis of rotation thus is 90°, by inclining the entire sample changer preferably so that the angle of the cassette to the horizontal plane is not smaller than about 30°, because otherwise, at too horizontal a location of the cassette, the sucking and mixing of samples will be unreliable.

Preferably, the cassette is mounted on one end of an axle, at the other end of which an electromagnetic brake is located, which co-operates with an electromagnetic clutch. This arrangement ensures instantaneous stopping of the cassette in accurate position from a rotation speed of about 15—20 rpm after the electronic counting mechanism has ordered said stop. The electronic counting mechanism in its turn has received a signal from the analysis instrument implying that the analysis instrument is ready for receiving the next sample.

Preferably, the sampling needle comprises two tubes, one for the sample liquid and one for permitting air to enter the test tube, so that vacuum is prevented from arising in the test tube.

The invention relates to apparatus for receiving samples of liquid suspensions each in a container, and for withdrawing from the suspension in a specified one of the containers a sample, which may be an accurately measured sample, of that suspension, and for passing the withdrawn sample to a further apparatus for examination or testing. For convenience the quantity of suspension in the container will be referred to hereinafter as the bulk sample and the withdrawn sample will be referred to simply as the sample.

Apparatus of this kind finds extensive use in the examination of blood, and it is convenient to describe the invention in relation to such use, but it is to be understood that similar considerations apply in the examination of other suspensions. For the purpose of this specification a suspension is to be considered as comprising generally a liquid or liquid mixture which is subject to sedimentation or separation of its components on standing, and from which liquid it should be possible to obtain samples which are representative of the liquid or mixture as a whole.

In the examination of blood it is the practice to obtain a bulk sample from each patient and to place each sample in a suitable container; the sample is identified with the patient from whom it has been obtained by a suitable marking on the container. It is desirable that samples should be protected against contamination, and though it is not a universal practice the individual containers after the insertion of the samples should be preferably sealed in some way. The containers are held in suitable holders, each holder being adapted to receive a specific number of containers in allocated positions; the holders are then conveyed to the examination station. At the examination station a sample is withdrawn from each container and the withdrawn sample is passed to further examination apparatus, for instance in the case of blood to a cell counting apparatus after appropriate dilution.

In this type of examination it is highly desirable that the sample derived from the bulk sample in the container should be truly representative of the bulk sample as a whole, especially in the counting of cells as in the example mentioned. This requirement calls for the bulk sample suspensions in the containers to be rendered substantially uniform before the samples are withdrawn, and this in turn necessitates adequate mixing of the suspensions by some suitable mode of agitation.

Various methods of agitation to effect mixing are possible, depending upon the circumstances in which the sampling is made, but where the agitation is for the purpose of effecting mixing in an apparatus in which samples are to be taken as desired from containers in a plurality of holders, restraints are imposed on the method which can be adopted. In general, agitation can be effected by shaking, rocking or stirring the container, but for some materials, including blood, it is our experience that repeated inversion of the container effects good mixing, especially if the container is of elongated or tubular form. In a machine for sampling containers in batches it has been found possible to mix the contents of the containers by tilting the containers in their path to a sampling station, but which are not aware of any automatic apparatus for extracting samples from bulk samples in containers in a multiplicity of holders where this method of agitation has been found possible.

In accordance with the invention, in an apparatus for withdrawing samples from containers in a plurality of holders there is provided a carrier for receiving a multiplicity of the container holders; the carrier is mounted for movement about a pivotal axis, preferably by being rotatably mounted; the holders are received on the carrier so that on pivotal movement of the carrier through a sufficient angle the holders are moved so as to invert the containers and thereby agitate the bulk samples in the containers. The apparatus is provided with means for pivoting or rotating the carrier to bring a selected holder to a sampling station, and at the sampling station a sampling probe is used to extract a sample from a desired container on the selected holder.

There is a further problem in using an apparatus of this kind in that the liquids of the bulk samples should not be allowed to become non-uniform by sedimentation or separation of the components of the sample at least until the final container has been sampled; in accordance with the invention agitation is promoted and uniformity maintained by the pivotal movement of the carrier to bring a holder to the sampling station, and in addition agitation can be further produced by arranging additional pivotal movement of the carrier, preferably to cause inversion of the sample containers, when the carrier is moved to bring a fresh holder to the sampling station. This can be effected by arranging that the carrier makes a movement more than the minimum necessary to go from one position to the next, making at least half a revolution, or a corresponding pivotal angular movement, in doing so.

There is another advantage which flows from the use of a rotating holder carrier operating in the manner described, and this advantage arises in the loading of the holders onto the carrier. The holders are detachably received in receptacles on the carrier and are loaded one at a time at a fixed loading station; the carrier is moved to bring a desired carrier receptacle to the loading station and the holder is then inserted in the receptacle. The holders are received in the receptacles eccentrically with respect to the pivotal axis of the carrier, so that the mounting of a holder on the carrier results in an out-of-balance force on the carrier. Such an unbalanced force is undesirable in that it calls for a larger force to accelerate the carrier from one position to the next. In one apparatus according to the invention the out-of-balance force on the carrier due to the loading of successive holders on the carrier is reduced by rotating the carrier through an angle of about half a revolution between the loading of successive holders, thereby reducing the out-of-balance which would arise if the holders were loaded onto the carrier in successive positions on the carrier. It is to be observed that loading of the holders in this way causes movement of the carrier between roughly opposite positions, increasing the agitation of the liquid of the bulk samples in the containers, which is desirable for the reasons set out above.

In their preferred form the containers are straight parallel-sided tubes, which after the insertion of the bulk samples are closed by rubber stoppers. The stoppers have a central portion of reduced thickness; this portion is intended to be pierced subsequently by the sampling probe.

In this embodiment of the invention the holders are constructed as flat racks, adapted to receive a number of the tubular containers side by side, and when the racks are mounted in the receptacles on the carrier the general plane of each rack preferably passes through the axis of rotation of the carrier, with the racks then extending radially from that axis, with the stoppered ends of the containers outermost. For loading, the carrier is moved to bring a desired receptacle to the loading station, and the holder is then inserted in the receptacle. For sampling, the carrier is moved to bring a desired holder to a sampling station. At the loading station the holder being loaded is approximately horizontal; at the sampling station the rack is vertical or at a close angle to the vertical with the individual containers in the rack in the inverted position, stoppers downmost. A sampling probe is carried on a carriage which can move along a guide disposed beneath the rack near the sampling station, so that the probe can be positioned beneath any one of the containers in the rack. When so positioned the probe can be moved upwardly into the container for the time being above the probe, piercing the rubber stopper of the container, permitting the sample to be withdrawn from the bulk sample in that container into the interior of the probe. The positioning of the carriage and hence the probe along the guide can be effected by automatic control means so that fully automatic selection of a sample from any container is possible. By sampling the containers while they are in the inverted position the required volume of bulk sample for a given volume of sample is minimised.

In the examination of human blood it is most important that a sample should be correctly identified, for incorrect identification may have very serious consequences. While the change of incorrect identification can be reduced by care in the taking and marking of samples, error can still arise in the location of the rack at the sampling station or in the selection of the correct container from which the sample is to be taken. In the apparatus according to the invention the chance of such error can be virtually eliminated by arranging that the identification normally provided on the container is read by suitable means when the sample is being taken, in the course of movement of the probe into the bulk sample. The identification marks are arranged vertically on the exterior of the container and are read as the probe is raised before a sample is taken. Electric signals obtained in this way can then be compared with those appropriate to the desired container, and if there is disparity remedial action can be taken.

In a preferred embodiment of the invention to be described in more detail hereinafter a sampling apparatus is adapted to take samples from bulk samples in tubular containers, each container being closed by a rubber stopper. The containers are inserted in holders, in the form of flat racks, side by side. The apparatus comprises a main frame in which a carrier for the holders is rotatably mounted; the carrier is an assembly including a drum, the axis of rotation of the drum being horizontal. The drum is adapted to receive a number, for example ten or twelve, container racks: the racks can be received in receptacle guides on the drum, the bottom edge of each rack being shaped and arranged to slide endwise into a guide. At the loading station the racks are loaded into the receptacles of the carrier in an approximately horizontal position; at the sampling station, at the lower part of the machine, the containers in the racks are inverted, stopper ends downmost.

Each rack carries on its end face a coding marking which with the rack in its located position in the guide on the drum and at the sampling station is adjacent code reading means on the frame. Code signals from the code reading means are fed to a central control unit to control drum location and to assist in other control or checking functions, so that a selected rack can be brought to the sampling station and its arrival verified.

Movable along guides mounted on the frame is a probe support carriage, a stepping motor and belt drive being used to move the carriage backwards and forwards along the guides. A sampling probe extends upwardly from the carriage and the accurate positioning of the probe beneath the position of a container in the rack is controlled by locating means associated with one of the guides; the locating means comprises pairs of light sources and photosensitive elements and an obturating device on the carriage which passes between the respective sources and elements, and associated electrical circuits.

The probe carried on the support carriage can be reciprocated vertically, thereby to cause the probe to be inserted through the rubber sealing stopper of the selected container. This reciprocation is effected by moving a probe assembly up and down by a pneumatic actuator; a sample metering valve is also mounted on the carriage.

To avoid contamination of the bulk sample of one container by that of another, the probe is cleaned after each insertion into a container; the probe after withdrawal from a container moves to a wash chamber where it can be washed internally.

Two embodiments of the invention are shown by way of example in the accompanying drawings, in which:—

Figure 1 is a sectional view of a bulk sample container;

Figure 2 is a front view of a container rack;

Figure 3 is an underplan view of the container rack of Figure 2;

Figure 4 is a sectional view of the rack of Figures 2 and 3, taken on the line 4—4 of Figure 2;

Figure 5 is a sectional view of the rack of Figures 2, 3 and 4, taken on the line 5—5 of Figure 2, and showing the position of a container in the rack;

Figure 6 is a simplified perspective view of a complete sampling apparatus;

Figure 7 is a front view of the internal part of the sampling apparatus, but without the rack drum, omitted for clarity;

Figure 8 is a rear view of the parts of the apparatus shown in Figure 7;

Figure 9 is an end view of the apparatus of Figures 7 and 8, as seen from the left hand end of Figure 7, but indicating the drum position in outline and omitting the probe carriage assembly;

Figure 10 is a plan view of the apparatus of Figure 7, 8 and 9, also omitting parts of the probe carriage for clarity;

Figure 11 is a side view of the drum assembly of the apparatus of Figures 7 to 10, removed from the apparatus, and partly in section;

Figure 11A and Figure 11B, adjacent the ends of the drum of Figure 11 show in section the parts of the apparatus which immediately cooperate with the ends of the drum to support and drive it;

Figure 12 is a rear view of the drum assembly of Figure 11;

Figure 13 is a front view of the drum of Figure 11, with an indication of the position of an inserted rack;

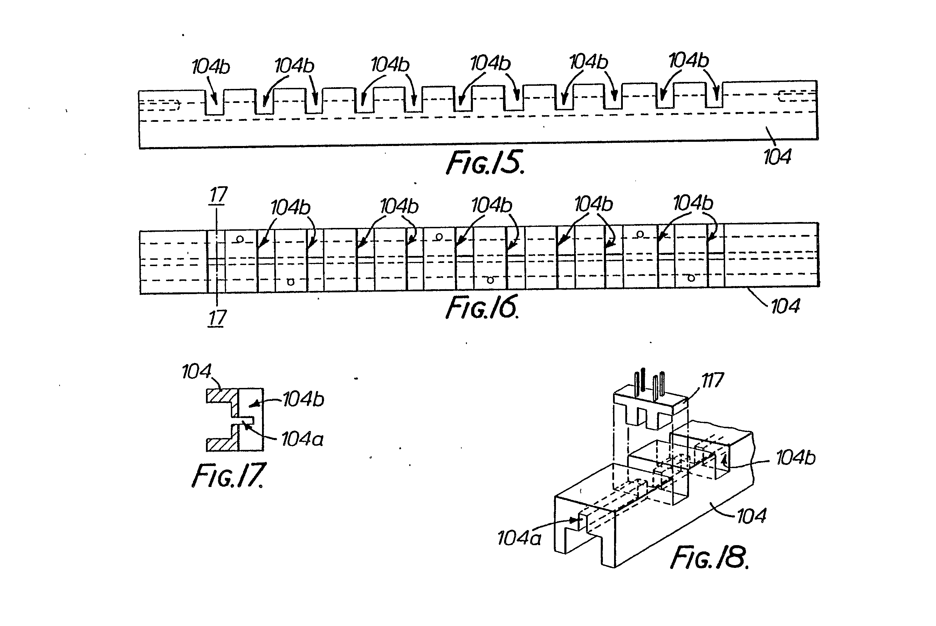

Figure 14 is a plan view of the probe carriage assembly, viewed at right angles to the general plane of the assembly;

Figure 15 is a plan view of the guide channel for the rear, upper edge of the probe carriage;

Figure 16 is a rear view of the guide channel of Figure 15;

Figure 17 is a sectional view of the guide channel of Figure 15, taken on the line *17—17* of Figure 16;

Figure 18 is a diagrammatic fragmentary exploded perspective view of the guide channel of Figure 15, and showing a position sensor;

Figure 19 is a sectional view of a metering valve;

Figure 20 is a section, on an enlarged scale, of the probe and probe cleaning unit;

Figure 21 is a diagram showing the organisation of the actuation of the apparatus, including the control unit, sensors and the actuated elements,

Figure 22 is a diagram showing the interconnections of the liquid-handling components.

Figure 23 is a schematic side view of a second apparatus constructed in accordance with the invention,

Figure 24 is a schematic front view of the second apparatus, and

Figure 25 is a side view of a cassette used in the second apparatus and illustrates different forms the cassette can take.

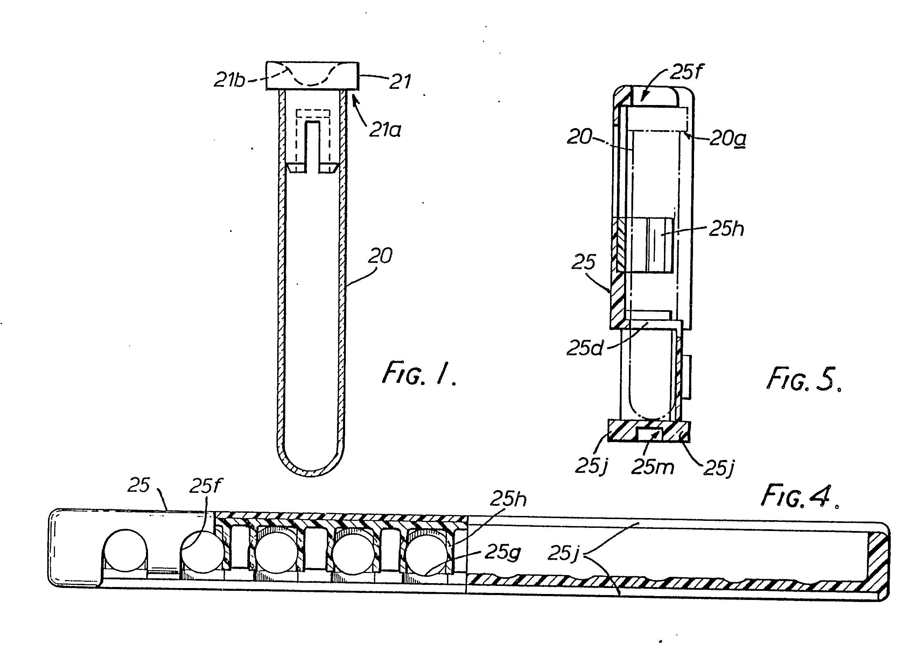

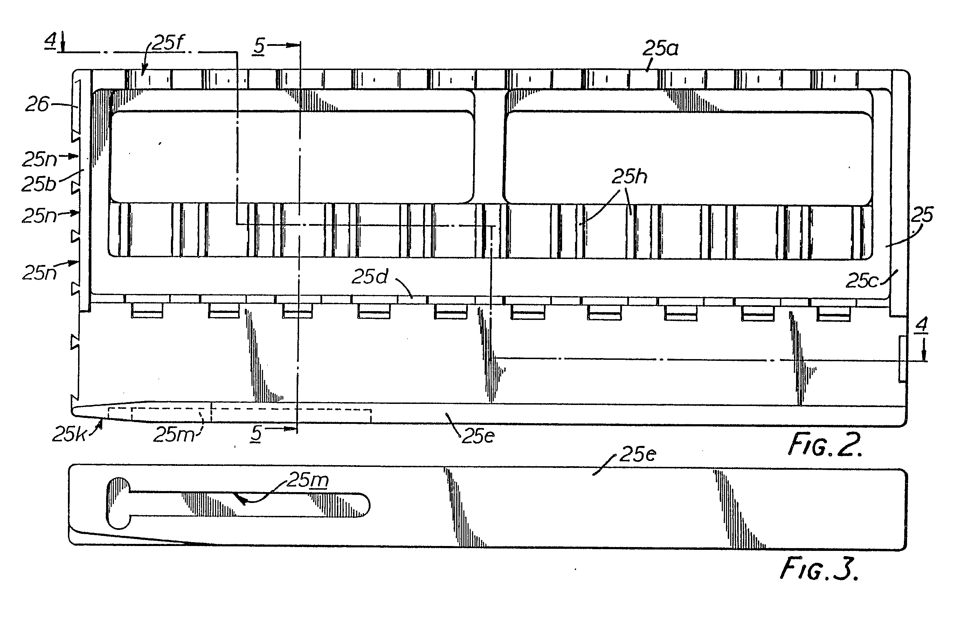

The apparatus shown in the drawings is intended for the taking of samples from bulk blood samples obtained from patients by a medical practitioner or orderly. The bulk samples are placed in individual containers; one suitable form of container is shown in Figure 1. The container 20 is similar to a test tube, and is closed by a rubber stopper 21. The stopper has a shoulder 21a which limts the insertion of the stopper into the tube, and there is a central depression 21b in the top of the stopper through the middle of which a sampling probe can be inserted. On the outside of the tube is a label, not shown, for coded information identifying the patient from whom the sample has been obtained; preferably the code adopted is the so-called bar code, but any machine readable code can be used. After the bulk samples have been placed in the tubes the rubber stoppers are inserted and the tubes put into racks, of which one is shown in Figures 2, 3, 4 and 5. Alternatively, the bulk sample is introduced by a needle through the rubber stopper and a vacuum within the container.

The rack is shaped as a rectangular frame 25 with a top portion 25a, ends 25b and 25c, a central web 25d extending between the ends 25b and 25c, and a bottom 25e. The top portion 25a is formed with semicircular recesses 25f, and the central web 25d has in it circular holes 25g, each to receive a container tube such as tube 20 shown in Figure 5. From the central web extend pairs of projections 25h between which a container tube can be clipped; with the tube in the rack the bottom of the tube rests on the frame bottom 25e and the shoulder 21a on the stopper of the tube lies beneath the top 25a of the frame. In this way the inserted tube has only limited up and down movement in the rack.

The bottom of the rack is formed with longitudinal flanges 25j, the ends of which are tapered at 25k, and on the bottom surface there is a recess 25m adjacent the tapered ends of the flanges. The outer face of the end 25b of the frame has recesses 25n for metallic coding markers of which one is shown at 26. The tapered ends ·of the bottom of the rack facilitate the insertion of the rack in a receptacle guide in the sampling apparatus, and the recess in the bottom of the rack is used in inserting and retaining the rack in the guide. The metallic inserts 26 are in predetermined positions in the end face of the rack and are coded by the presence or significant absence of an insert.

When the sample has been taken from the patient and put in the tube the orderly marks the tube to identify the patient from whom the sample has been taken and may make a supplementary record of the tube position in the rack and the identification of the rack; this latter information is passed to a central control point, subsequently to be used in verifying that when the sample is taken from the tube it is correctly identified with the patient.

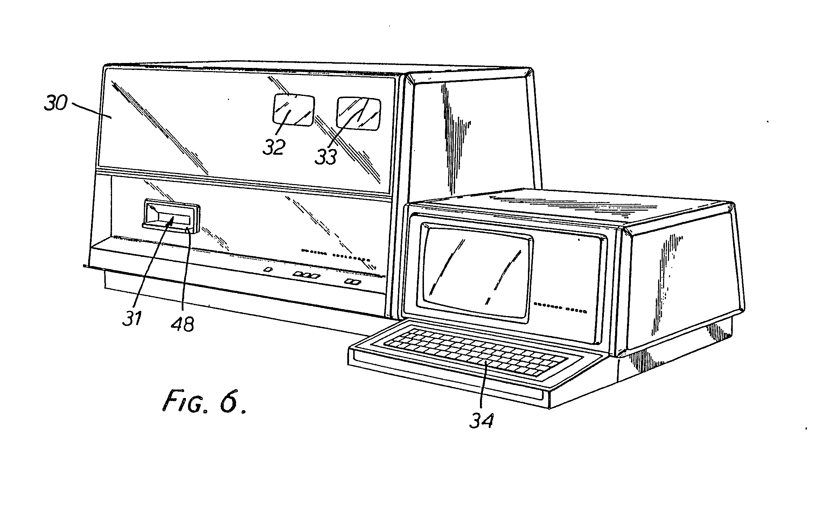

The racks, each loaded with containers, are transferred to a sampling apparatus which operates to withdraw measured samples from any desired one of the containers. A simplified perspective view of the sampling apparatus is shown in Figure 6. The apparatus is enclosed within a rectangular housing 30, which has an aperture 31 for the insertion and withdrawal of racks; this aperture is obstructed by a movable shutter if the apparatus is not in a condition for the insertion or for the removal of a rack. The operator inserts the rack into the aperture and when the rack is partially inserted its presence is detected and it is fully drawn into the apparatus; thereafter the sampling operation is carried out fully automatically under the control of the central control unit; after sampling the racks are partially ejected from the apparatus through aperture 31, and removed by hand.

The apparatus has video displays at 32 and 33 which can be used primarily by technicians in monitoring and servicing the performance of the apparatus, and a data insertion keyboard 34 for the insertion into a computer in the apparatus of information and instructions which determine the operation and performance of the apparatus.

The internal construction of the apparatus inside the casing is described in more detail hereinafter, but, briefly, there is a rotatable drum which carries a series of guides each forming a receptacle for an inserted rack. After each rack is inserted through the aperture 31 and into one of the guides on the drum the drum is rotated to bring a new guide into position adjacent the aperture. When as many racks as is desired have been inserted in this way, under the control of the central control unit the drum can be rotated to bring any designated rack to a sampling station at the lower part of the apparatus. At the sampling station a sampling probe can be moved along the line of containers in the selected rack until the probe is positioned beneath a desired container in the rack, and the probe is then raised to pierce the rubber stopper sealing the container. A sample is drawn off and passed to a measuring device, and an accurately measured quantity of the bulk sample is conveyed to a diluting and cell counting arrangement of the type commercially available under the registered Trade Mark Coulter, and to other examination arrangements. This examination equipment is also housed in casing 30, so that the apparatus provides an integral sampling and testing unit.

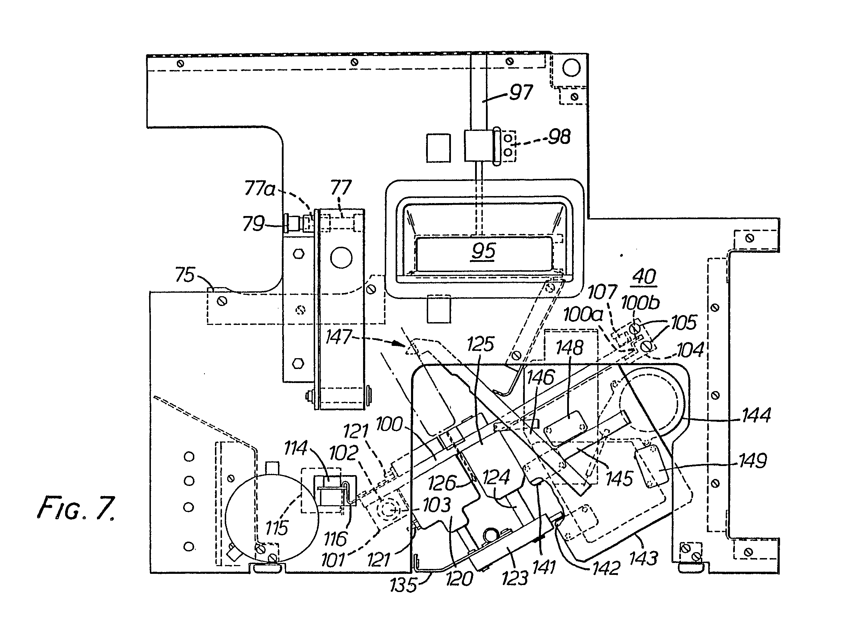

That part of the apparatus which is directly dedicated to sampling is shown in Figures 7, 8, 9 and 10. This apparatus comprises an assembly consisting of a front plate 40 and a rear plate 41 held in spaced parallel relation by spacing bars 42 and 43 and by structural spacers 44 and 45. This assembly is an integral structure which can be removed from a main framework supported in the casing 30, and not shown in these Figures. The spacing bars 42 and 43 have on their undersides bearing pads 46, 47 respectively which run in guides on the bottom of the main framework, to facilitate insertion and removal of the assembly for servicing or maintenance.

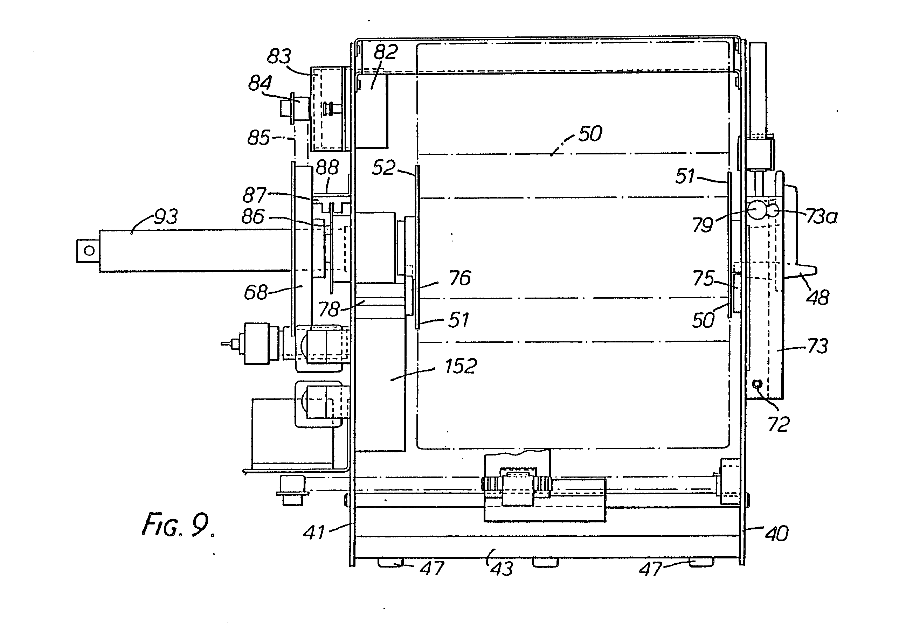

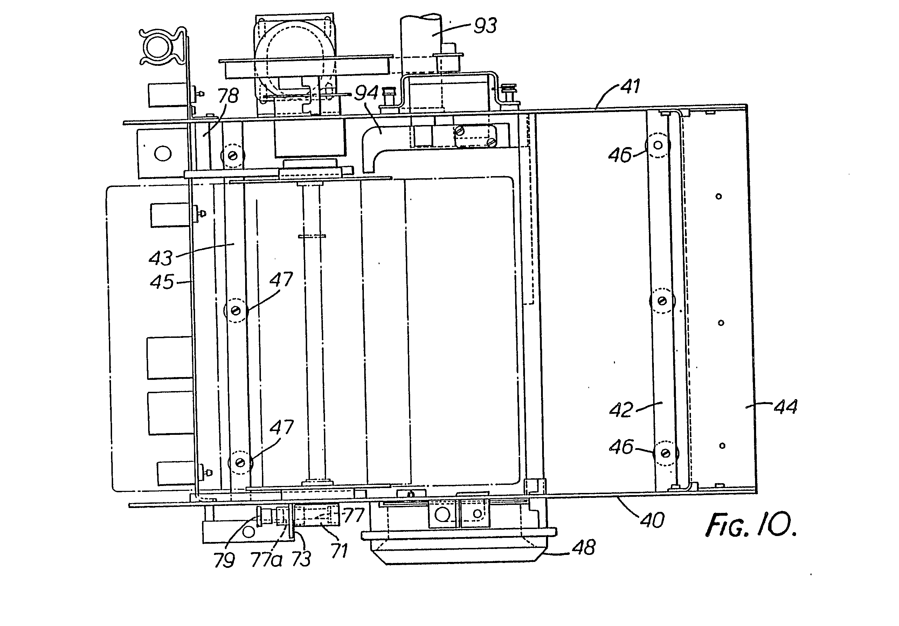

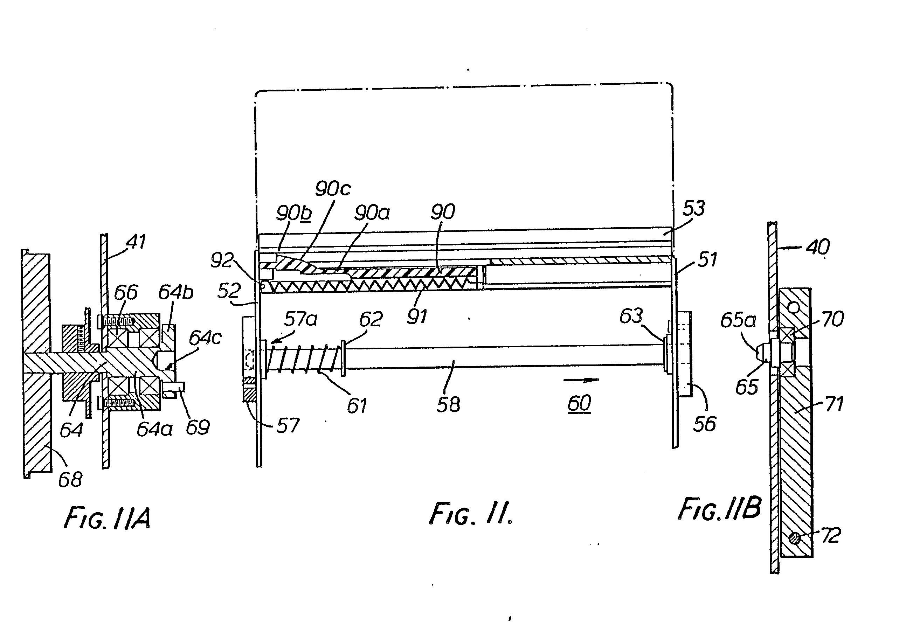

In the front plate 40 is an opening which receives a slot guide members 48; this guide member projects through an opening in the casing 30 and is adapted to receive and guide racks as they are inserted or removed. When the racks are inserted through the slot of guide member 48 the racks are received by guides in a drum which is rotatably mounted in the main assembly, the axis of rotation of the drum being disposed between and at right angles to the front and rear plates 40 and 41. The drum is shown in outline at 50 in Figures 9 and 10 and in more detail in Figures 11, 12 and 13.

The drum is made removable from the assembly, so that in the event of its becoming contaminated by a sample, for instance due to leakage from a container or by accidental fracture, it can be removed and more easily cleaned, or replaced.

The drum is constructed with two circular end plates 51 and 52 between which receptacle guides 53 are fastened by machine screws at 54 and 55. The guide 53 which receive the racks are formed each from an aluminium extrusion which presents at its upper part two parallel walls 53a, 53b, which are spaced to receive the lowermost part of a rack, with inwardly projecting ribs 53c, 53d, which form a channel to embrace and retain the bottom of the rack. Two depending portions 53e and 53f of the guide have inwardly facing flanges 53g and 53h at their lower edges and an opening 53j is formed in the transverse part of the extrusion.

Fastened respectively to the centre of end plates 51 and 52 are bosses 56 and 57; the bosses have in them central bores to receive a bearing shaft 58. This shaft can move longitudinally in the bores in the two bosses, and is urged to move in the direction of arrow 60 in Figure 11 by a compression spring 61 which surrounds the shaft, one end of the spring bearing against the base of a recess 57a in the end face of boss 57, and at its other end the spring bears against a circlip 62 in a groove on shaft 58. The movement of the shaft in response to the pressure of the spring is limited by a further circlip 63 in a groove on shaft 58 coming into contact with the face of boss 56. For a reason which will appear, the rear end of shaft 58 adjacent spring 61 is slightly coned, while the other end of the shaft is squared off; the outer end of the bore in boss 56 is countersunk. When circlip 63 lies against the face of boss 56 under the pressure of spring 61 the squared end of the shaft is approximately flush with the outer face of boss 56, and the tip of the coned end of the shaft is approximately flush with the outer face of boss 57.

When the drum is installed in the machine it is supported at its rear end by engagement of the coned end of the shaft with a support bearing and drive member 64, and the forward end of the drum is supported by a support member 65. Support member 64 has a shaft section 64a carried in ball bearings 66, 67 mounted in the rear plate 41 of the frame, a belt drive pinion 68 is fastened to the outer end of the shaft section 64a. At the inner end of member 64 is a driving flange 64b; this flange has a central counterbore 64c which can receive the coned end of shaft 58, and a driving pin 69 on the flange can enter a recess in boss 57.

The drum assembly is offered up to support members 64 and 65 with the shaft urged in the direction of arrow 60, so that neither end of the shaft will project from boss 56 or 57, permitting the drum to be positioned between bosses 56 and 57, but when the drum is in position movement of the shaft in the direction opposite to arrow 60 will caused the coned end of the shaft 58 to enter the counterbore, and so support the rear end of the shaft. This longitudinal movement of the shaft can be effected by movement of support member 65.

Support member 65 is mounted in a ball bearing 70 in a recess in a block 71 pivotally mounted on a pivot pin 72 fastened to a bracket 73 on the front surface of plate 40. When the block is moved rearwardly, in the direction opposite to arrow 60, a small nose piece 65a on the end face of the support member 65 engages the squared end of shaft 58 and moves the shaft endwise, against the tension of spring 61. This motion has a two-fold effect: the nose piece enters the countersunk end of the bore in boss 51 and thereby supports the boss and with it the forward end of the drum assembly, and the longitudinal movement of the shaft in the direction opposite arrow 60 causes the coned end of the shaft to enter the counterbore 64c in the support member 64, and thereby support the other end of the shaft, and the drum; thus, the drum is supported at both ends.

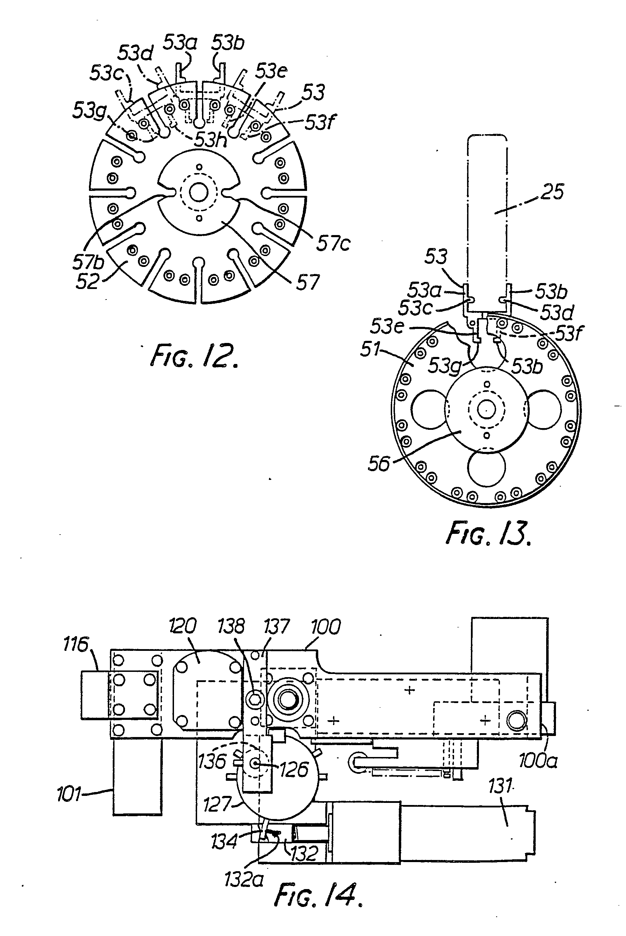

The drum can be rotated by a driving connection established between driving flange 64a on support member 64 and the boss 57, by means of the driving pin 69. When the drum is offered up for insertion in the apparatus, the pin 69 is in the horizontal position. The end of boss 57 is formed with two tapered slots 57b and 57c, Figure 12, and the drum is moved into position horizontally with one or other of the two slots disposed to receive the pin 69.

The insertion of the drum is facilitated by two guides 75 and 76, attached respectively to the inside surfaces of front and rear plates 40 and 41; the bosses 56 and 57 can rest on the upper edges of these guides as the drum is located between the support members 64 and 65.

When the drum has been located between the support members, the block 71 is pivoted rearwardly, moving shaft 58 as described above and securing the drum; a latch is provided to hold the block in this rearward position. This latch comprises a spring loaded latch pin 77 accommodated in a bore in the block 71. The latch pin can be moved axially, against the spring loading pressure, by a finger knob 79. The latch pin has a central portion 77a of reduced diameter, which passes through a latch slot 73a in bracket 73. When the knob 79 is pressed manually, the latch pin moves against the spring loading, and the reduced portion of the pin, in conjunction with the shaping of the latch slot, allows the latch pin to move and release the block, when the block can be swung forwardly. Shaft 58 can then move under the pressure of spring 61, freeing the ends of the shaft and permitting the drum to be withdrawn.

The drum can be rotated by means of a stepping motor 82 carried on a bracket 83 fastened to the rear plate 41 of the frame; the motor drives a belt pinion 84, and a belt 85 passes round this pinion and round belt gear 68 on the drive and support member 64, coupled to the drum. The belt is of the toothed type, so that there is no belt slip between the belt and pinion 84 or gear 68. The bracket 83 is adjustably fastened to the plate 41, to enable the belt to be correctly tensioned, and with these provisions it can be ensured that the steps of the stepping motor are precisely related to the belt, and hence the drum, position.

There are a predetermined number of rack guides on the drum, and in the operation of the apparatus it is necessary to bring the racks to the loading and sampling stations of the apparatus, which calls for accurate angular movements of the drum to be effected and verified. For this purpose a drum position sensing disc 86 is secured to the drum support member 64 inwards of the gear 68. The periphery of this disc has a single slot in it, and a light source and a photosensitive diode, not shown, are arranged on opposite side on the disc in a housing 87 attached to a bracket 88 on rear plate 41; light from the light source will fall on the photodiode when and only when the slot on the disc passes between the two. The signal from the photodiode is passed to the central control unit.

The stepping drive motor 82 for the drum produces, under the control of the central control unit, a fixed number of steps of movement for one revolution of the drum and hence for the movement between successive dwell positions of the drum. When the slot used as the index slot passes the photodiode an electric counter is started in response to the photodiode output, and the stepping motor is energised to advance the drum. The counter then counts the number of steps of the stepping motor, and when the drum has been advanced a number of steps which is slightly less than the total number of steps required for the complete movement the drum is decelerated and advanced more slowly through the number of steps necessary to complete the movement to bring the drum to its new position. As will appear, the drum does not always move directly between successive positions of the drum, and on loading in particular the drum may make half a revolution or more on each movement. This operation is under the control of the central control unit.

Under such control the drum can be brought to a position with an empty guide in register with the slot 31 in the slot guide 48, and if it is determined by the control unit that it is permissible for a rack to be inserted the rack can be passed through the slot, in an approximately horizontal position, and into the guide for the time being located behind the slot.

It is important that when a rack is inserted in a guide it should reach the fully inserted position and be retained there, and to ensure this cooperating means are provided on each rack and guide.

The lowermost part of each guide 53 with the depending portions 53e and 53f and flanges 53g and 53h define a groove of rectangular cross section open along the bottom edge of the guide. In this groove runs a fitting slide member 90 of nylon or the like. The slide is spring loaded by a spring 91 attached at one end to the slide on a cross pin 92 and attached at the other end to a lug on the guide; the slide is thus urged by the spring towards the rearward end of the guide, that is, it is urged in the direction of insertion of the rack. The slide is formed with a flexible integral cam arm 90a which terminates in a tooth 90b which projects upwardly from the slide through the slot in the bottom of the guide, and thus projects into the path of a rack when it is inserted into the guide.

The slide member 90 of the guide members for the time being positioned in register with the entry slot 31 can be moved by a pneumatic actuator 93 secured to rear plate 41. When the apparatus is ready to accept a rack the actuator is operated, advancing its ram in the forward direction. At its leading end the ram carries an ejector pawl 94, and this pawl contacts the end of the slide in the guide and pushes the slide along the channel in the bottom of the guide, against the tension of spring 91. When the slide is moved in this way, and the ram is approaching the limit of its stroke, a cam surface 90c on the slide, just forward of tooth 90b, engages and passes under the edge of the slot in the guide. This depresses the arm 90a, and with it the tooth 90b, leaving the recess in the upper part of the guide unobstructed.

When the rack is manually inserted and has been moved rather more than half way into the guide its position is sensed by a position sensor mounted on the eject pawl not shown, and the signal from this sensor, fed to the central control unit, causes the pneumatic actuator to retract. The slide 90 accordingly moves rearwardly and as it does so the cam surface disengages from the end of the slot and the tooth 90b moves into the recess 25m on the underside of the rack. The continued rearward movement of the actuator ram and the ejector pawl causes the slide to continue to move rearwardly also, and tooth 90b propels the rack in the same direction until it has been fully drawn into the guide. The spring 91 is effective to urge the rack against the rear end of the guide, which acts as an index surface. This location of the rack is important in the operation of correctly positioning the sampling probe beneath a selected container in the rack. When the rack is fully inserted and the pneumatic actuator fully retracted position sensors, not shown, are operated and corresponding signals transmitted to the central control unit to allow the machine to proceed.

When at the appropriate time the rack is to be withdrawn from the guide the reverse action takes place. The automatic actuator is operated and the rack is propelled along the guide, the leading end of the rack emerging through slot 31. When in the course of the stroke of the ram of the actuator the cam surface 90c on the slide engages the edge of the slot in the guide, the tooth 90b is depressed and freed from engagement with recess 25m in the bottom of the rack. The rack can then be fully withdrawn manually.

Means are provided to ensure that a rack can be inserted or withdrawn at the appropriate time only. With this object a shutter 95 is carried on the ram of a pneumatic actuator 97 on a bracket 98 fastened to front plate 40. The shutter is guided for vertical movement in the space between a recess in the back of slot guide 48 and the adjacent surface of the front plate 40, as will be seen from Figure 10. Position sensors are provided to detect the positions of the inserted rack, and signals sent to the control unit, in response to which the further operation of the apparatus is controlled by the unit.

As mentioned above, the racks are preferably loaded on to the drum on alternatively opposite sides, that is, the drum is rotated through about half a revolution, or a multiple of half revolutions, between successive insertions of the racks. This helps to keep the drum more nearly in dynamic balance, reduces the power required to accelerate the drum, and in general contributes to the smooth running of the machine. Unloading of the racks can be carried out in a similar sequence.

When the drum is fully loaded with racks, or is loaded with the desired number of racks, any desired rack can be brought to the sampling station and a sample taken from any one of the containers in the rack. The sampling station is at the lower part of the frame structure; at this station a sampling probe carriage can be moved along the line of containers in the rack until the probe is below the container from which the sample is to be taken, and the probe is raised to enter the container, piercing the rubber stopper and entering the bulk sample. The sample is withdrawn from the container through the probe, measured by a metering valve on the carriage and passed to further examination means, such as the cell counting device referred to above.

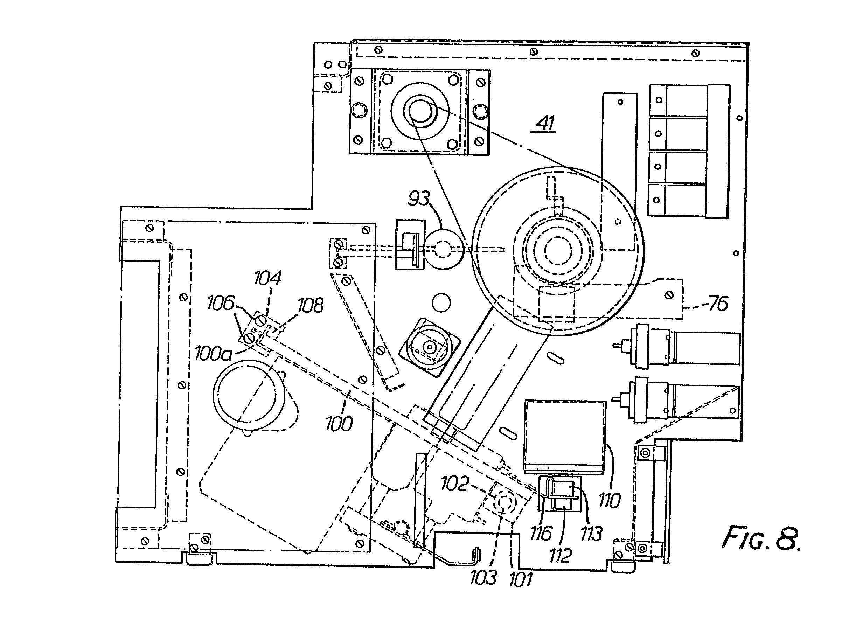

The probe carriage and the associated parts are shown in elevation in the lower part of Figures 7 and 8 and partly in Figure 9.

The probe carriage comprises a rectangular plate 100 which adjacent one edge has attached to it a bearing block 101 carrying linear bearings 102 which fit on a guide rod 103; the guide rod extends between and is fastened at its ends to the front and back plates 40 and 41 of the frame. This edge of the plate 100 can thus move freely along the rod, guided for linear movement. The other edge of the plate is also guided for linear movement. A channel member 104 extends between the front and back plates 40 and 41, being fastened to them by machine screws 105, 106 respectively. The end of plate 100 enters the channel, with nylon bearing pads 107 and 108 interposed. In this way, by the guiding means at both edges of plate 100 the plate can move linearly back and forth between the plates 40 and 41. As will be seen from Figures 7 and 8, plate 100 lies at an angle inclined to the horizontal, at approximately 30°.

The movement of the carriage along the guiding means is effected by a stepping motor and belt drive. The stepping motor 110 is mounted on a bracket on the rear plate 41 of the frame; a belt pinion 112 is secured to the shaft of the stepping motor and drives a belt which passes round an idler gear carried by a mounting bracket 115 fastened to the front plate 40. The belt 113 and the pinion 112 and gear 114 are of the toothed type, so that belt slip is avoided. The two spans of the belt are parallel to the guide rod 103, and one span of the belt is attached to the carriage by being clamped to a spring bracket 115 on the edge of the plate 100 of the probe carriage. Energisation of the stepping motor, under the control of the central control unit, is thus effective to move the carriage along the guides, the extent of movement being controlled by the number of energising pulses of current fed to the motor, and not the amplitude of the current. In this way the accurate position control of the carriage is maintained at all times, by the central control unit.

The channel member 104 also forms part of the means for accurately positioning the probe carriage along the guide rod 103. The channel is formed in the manner indicated in Figures 15 and 16 with a recess 104a extending along the base of the channel, and the base of the channel is interrupted at regular intervals by slots 104b in the rear of the channel which break into the recess 104a.

The end of plate 100 enters the recess in the channel, the edge of the plate being reduced in thickness at 100a, Figures 7 and 8, to allow it to move freely in the recess. This end 100a of plate 100 which enters the recess is also reduced in width, to leave a projecting portion which is dimensioned in relation to the spacing between the slots 104b and to the width of the slots. Position sensors 117 each comprising a light emitting diode and a photosensitive diode are inserted in each slot so that light from a diode will fall on the associated photodiode when and only when the slot is not obstructed by the projection 100b on plate 100.

This arrangement is such that when the probe carriage moves along the guide rod 103 driven by the stepping motor 110 the leading edge of the projection 100b will act as an obturator and will interrupt the light falling on the relevant one of the diodes, being the diode which pertains to the position at which it is desired to stop the carriage. At this time the carriage, under the control of the central control unit, is moving at relatively high speed between carriage positions; when the signal from the diode indicating the interruption of light is fed to the control unit the control unit operates to decelerate the carriage, this deceleration taking place while the light continues to be interrupted. This period of deceleration is followed by one in which the carriage is inched until the obturating projection no longer stops light falling on the diode, at which point the carriage is stopped. Energy is supplied to the stepping motor sufficient to hold the carriage in the stopped position, so to act as a brake.

The probe carriage carries the sampling probe and the means for raising and lowering the probe, for cleaning the probe, for measuring the volume of the sample drawn from the selected container and for reading the identification on the container from which the sample is taken.

The means for raising and lowering the probe includes a pneumatic actuator 120 the cylinder of which is fastened to plate 100; air connections, of which one is shown at 121, are made to opposite sides of the piston of the actuator to allow it to be positively driven in both directions. The ram of the actuator is attached to a plate 123, and this plate is guided for linear movement by a rod 124 which passes through linear bearings in a support block 125 also carried by plate 100.

The probe 126 is attached to a metering valve assembly 127 fastened to plate 123. The metering valve is of known type having three disc-like members 128, 129 and 130 in contact, the centre member being rotatable through a limited angle with respect to the other two; a transfer passage of known volume in the centre member can thereby be brought into register with inlet and outlet ports in the outer members. In one position of the centre member the blood sample to be measured is fed through the inlet port into the transfer passage until the latter is full, and then the centre member is moved to close the inlet port and place the transfer passage in communication with the outlet port. The volume of blood transferred to the outlet is thus accurately determined by the volume of the transfer passage. Connections to the inlet and outlet port are by means of flexible tubes, not shown.

The necessary movement of the centre member in this operation is effected by a pneumatic actuator 131 on plate 123; the ram 132 of the actuator has in it an opening 132a which receives a pin 134 on the centre member of the valve. The flexible connections to the ports of the actuator are guided in a guide bracket 135 on plate 123.

The probe 126, thus reciprocated by actuator 120, passes through a probe cleaning element 136 on a support bar 137 fastened to plate 100 by a bolt 138. When the probe has entered the container the blood sample is withdrawn by vacuum pressure and metered; the probe is withdrawn through an O-ring 139, cleaning fluid being aspirated through passage 140 and the interior of the probe.

Limit switches are provided to indicate the 'up' and 'down' limits of movement of the probe; microswitches 141 and 142 are fastened to plate 143 attached to plate 100, and the operating buttons of the switches are operated by contact with the edge of plate 123.

The disposition of the sampling station at a lower part of the apparatus has an important practical advantage. It will be appreciated that the racks are inserted in the guide at the loading station in a substantially horizontal position, when the stoppered ends of the containers radially outwards. It follows that when a rack is at the sampling station the containers in that rack will be inverted, with the stoppered end downwards. Consequently, it is necessary only for the probe to pierce the stopper for it to become immersed in the bulk sample, so that only a short probe and a short probe stroke is required. This is conducive to reliability and speed of operation. Further, only a minimum quantity of the bulk sample is wanted.

The probe carriage also carries an identification code reader, for identifying the container being sampled, by reading the code on the exterior of the container. Mounted on plate 143 is a reciprocating drive motor 144, which has an output shaft which is moved by the action of the motor back and forth through an angle of approximately 90°. On this shaft is an arm 145, on the extremity of which is pivoted an optical reader tube 146 of conventional construction; the extremity of this tube has an optical slit element 147 adapted to contact the identification label on the exterior surface of the container 20 being sampled. Behind element 147 is a lens and a mirror, not shown, by which light is projected down the interior of the tube to photosensitive means, not shown.

The lower end of the reader tube 146 is spring loaded by a tension spring 150 attached at its one end to arm 145 and at its other end to the end of tube 146, so that the tube is biased to move in the anticlockwise direction as seen in Figure 7 and so cause the tip element to bear against the surface of the container. As the arm moves in the anticlockwise direction from the position shown in Figure 7 the element 147 will move down the surface of the container being sampled, in contact with the identification markings on the container. The electrical signals produced are transmitted to the central control unit and compared with a signal indicative of the container from which the sample should be taken. If the signals are not the same remedial action can be taken.

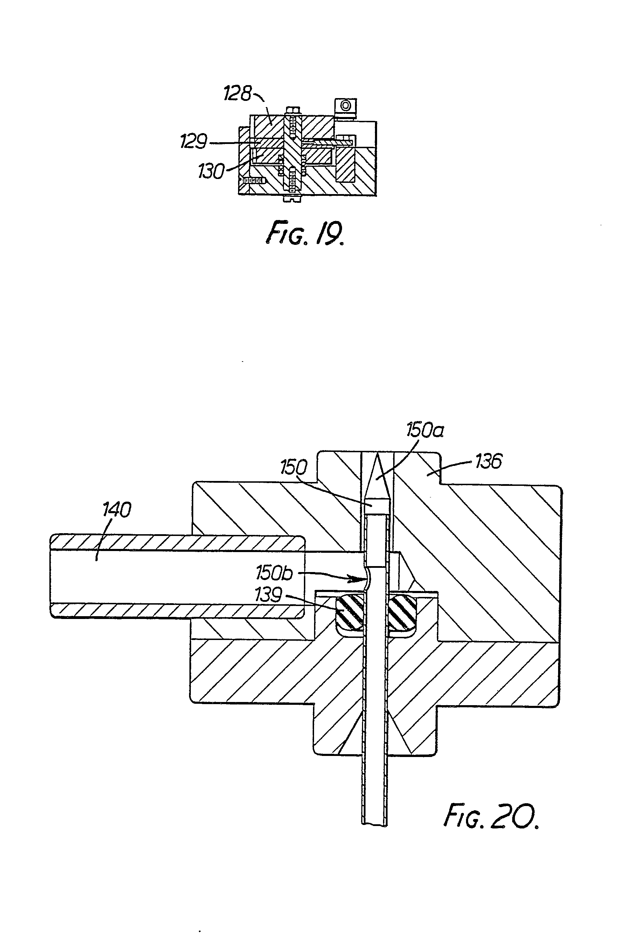

It has been found that the control of the probe 126 and especially the shaping of the probe tip is important in the successful operation of the sampling apparatus, and a form of probe which has been found satisfactory is shown in Figure 20. The probe comprises a thin walled tube of stainless steel closed at its end by a plug 150 having a pointed tip 150a. Liquid entry into and egress from the interior of the tube is through a small opening 150b in the side wall of the tube, adjacent the inner end of the plug 150. The advantage of using the opening in the side wall of the tube for the liquid is that it permits a clean entry of the probe into and through the sealing stopper of the container, and also minimises the possibility of the probe opening becoming clogged, as would be likely if the opening were at the tip of the tube. By disposing the opening close to the inner end of the plug, cleaning of the probe, by passing cleaning liquid through the opening, is facilitated.

To permit verification of the identity of a particular rack, which is important in ensuring that the sample being taken is correctly identified, the racks are coded by the metallic inserts 26 described above. Metallic reading means are provided on the frame of the apparatus. A six digit binary coding is used, which affords identification for use with 30 racks, but any other number of digits can be adopted as may be required. Metallic elements are placed in the appropriate ones of the six positions on the end wall of the rack. The code reader is in a housing fastened to a vertical of the gantry near the drum position sensing disc. For reliable reading the spacing between the magnetic inserts on the end faces of the racks and the sensing means should be maintained constant within fairly close limits, and this spacing is ensured by the spring loading of the racks in the guides by the means previously described. The signals from the code reader are sent to the central control unit and compared with the data pertaining to the desired rack, and if there is disparity, as there would be if the wrong rack were at the sampling station, remedial action can be taken.

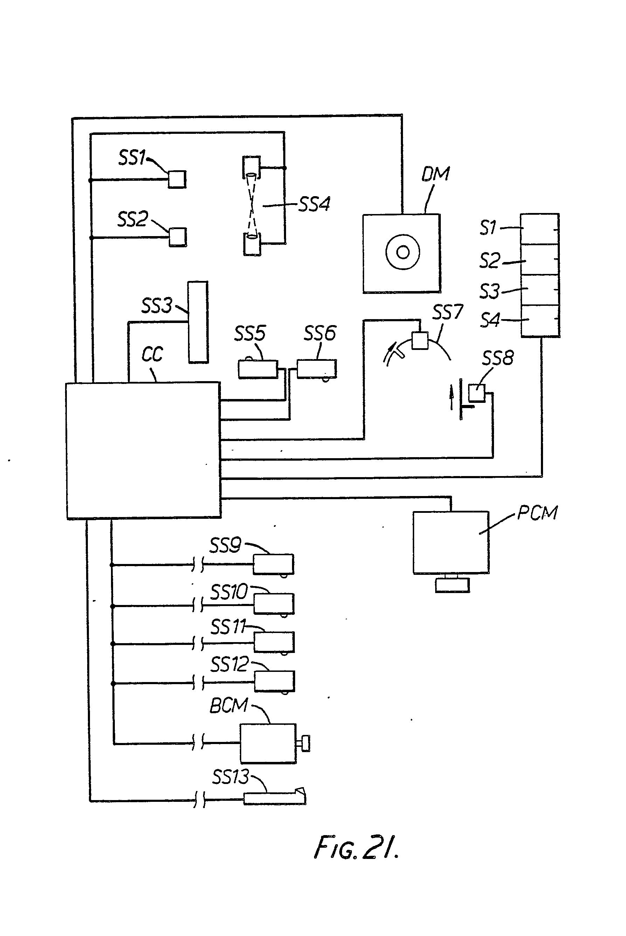

The general organisation of the central control unit of the apparatus is indicated in Figure 21.

The control unit responds to a number of sensors, as follows:

| | |
|---|---|
| Shutter open sensor | SS1 |
| Shutter closed sensor | SS2 |
| Probe carriage position sensor (ten positions) | SS3 |
| Rack load path clear sensor | SS4 |
| Rack inserted sensor | SS5 |
| Rack eject pawl retracted sensor | SS6 |
| Drum strobe sensor | SS7 |
| Drum lock sensor | SS8 |
| Probe needle pierce sensor | SS9 |
| Probe needle withdrawn sensor | SS10 |
| Bar code reader drive up sensor | SS11 |
| Bar code reader drive down sensor | SS12 |
| Bar code reading sensor | SS13 |

The control unit and computer actuate:—

| | |
|---|---|
| Drum rotation motor | DM |
| Probe carriage traverse motor | PCM |
| Bar code reader drive motor | BCM |
| Shutter open solenoid | S1 |
| Drum lock solenoid | S2 |
| Probe raise/lower solenoid | S3 |
| Metering valve solenoid | S4 |

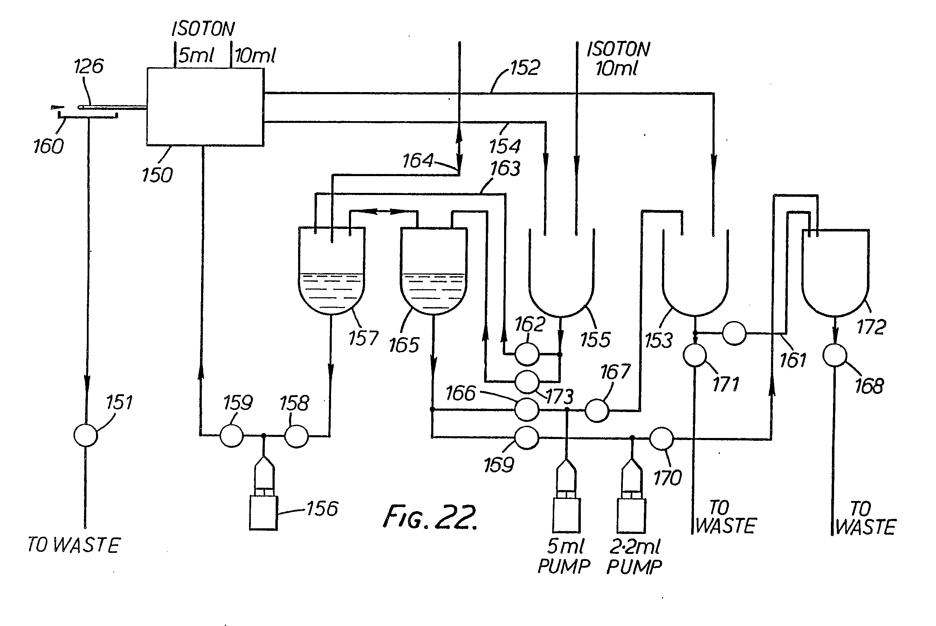

While the apparatus described is suitable for taking a sample for any purpose, it is specifically intended for taking and testing samples of blood, and also includes means for completing such tests within the apparatus itself. Figure 22 shows the arrangement adopted in the apparatus in diagrammatic form.

The sample is withdrawn from the bulk sample by the sampling probe 126 and is passed to the blood sampling valve assembly 150; the surplus blood sample can pass through valve 151 to waste. In the assembly a diluent, such as that available commercially under the trade mark Isoton, is used to produce a 5 ml of diluted sample on line 152, and this sample passes to white blood cell bath (WBC) 153, and at the appropriate time a 10 ml of diluted sample which passes to red blood cell (RBC) bath 155. In the WBC and RBC baths the cells are counted by a suitable counter, such as that available under the registered Trade Mark Coulter.

While cell counting is taking place, a 5 ml pump 156 draws a 5 ml dilution of RBC dilution from a RBC dilution in container 157, through valve 158, and passes it through valve 159 to valve assembly 150. This liquid is used to clean the valve and the container from which the sample has been drawn, the wash liquid passing into the collection cup 160 and out to waste through valve 151.

When counting has been completed 2 ml from the WBC bath 153 is sent to the haemoglobin (HGB) bath 172 through line 161, and a haemoglobin test, such as a colorimetric test, is made.

The RBC bath 155 is emptied through valve 162 and line 163 to the RBC dilution container 157, by vacuum pressure applied to the closed container through pneumatic control line 164. A transfer tube removes any overflow to waste, through the pneumatic control line 164.

Both RBC dilution and RBC rinse containers 157 and 165 are arranged to overflow a small amount in each cycle, to ensure that air is not aspirated into the pumps. The volumes of the containers are sufficient to ensure that differences between successive samples do not affect the carry over in the short term.

The 10 ml of Isoton from assembly 150 on line 154 is dispensed into the RBC bath 155 for rinsing, and 5 ml of RBC rinse, previously aspirated through valve 166, is dispensed through valve 167 into the WBC bath 153 for rinsing.

The liquid in the HGB bath 172, after measurement, is passed to waste through valve 168. For rinsing, 2.2 ml of RBC rinse, previously aspirated through valve 169, is passed through valve 170 and washes out the HGB bath 172 and then goes to waste, this cycle being repeated. Valve 171 is opened, to allow the WBC bath 153 to drain to waste, and valve 173 is opened to allow the contents of the RBC bath 155 to pass to the RBC rinse container 165.

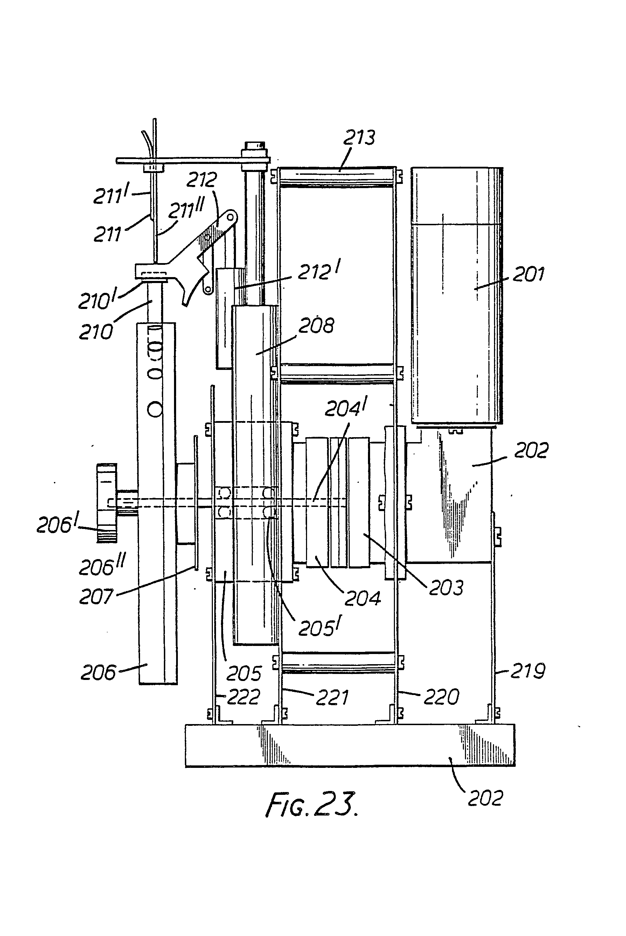

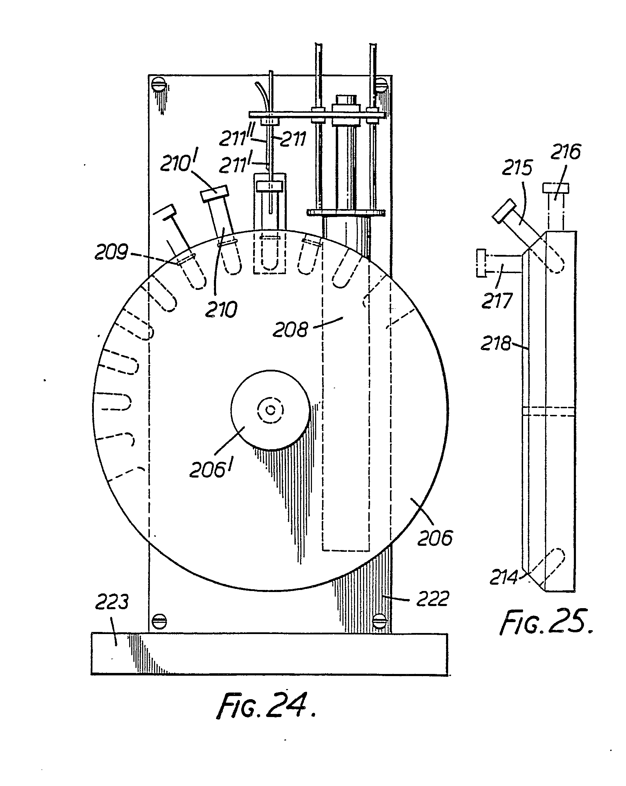

Referring to Figures 23 to 25, a sampling apparatus for mixing and sampling blood or similar settling liquids requiring continuous mixing is illustrated. The blood or other liquid for subsequent analysis is contained in test tubes 210 closed by soft rubber or plastic plugs 210'. The test tubes 210 are mounted along the periphery of an easily exchangeable cassette 206 holding twenty-five test tubes. The cassette is circular and the test tubes are mounted radially therein and extend from the circumferential surface of the cassette.

The sampling apparatus has a base 223, support members 219, 220, 221 and 222, and distance pieces 213.

The test tubes 210 are retained in the cassette 206 in holes drilled in the cassette and which correspond to the outer diameter of the test tubes plus a small clearance. A groove of semi-circular shape is provided in the circumferential surface so that the grooves are tangent to the holes for the test tubes. An O-ring 209 is inserted into each groove and has a thickness slightly exceeding the width of the groove. As a result, the O-ring penetrates into the test tube hole by one or some tenths of a millimeter, which is sufficient for holding the test tubes in position during rotation.

The cassette 206 is connected to be driven by a motor 201, running at 1400 revolutions per minute, by way of a reduction gear 202 with reduction ratio 75:1, an electromagnetic clutch 203 and an electromagnetic brake 204. The output shaft of the reduction gear 202 runs at 18·5 revolutions per minute and the electromagnetic clutch 203 connected to said shaft transfers the rotary movement to an axle 204' and the electromagnetic brake 204.

The axle 204' is mounted by ball bearings 205', with an associated bearing box 205. At the other end of the axle 204', the cassette 206 is mounted and secured by means of an internally threaded wheel or knob 206'.

A guide pin 206" or a wedge on the drive shaft are provided to ensure that the cassette 206 can be mounted on the drive shaft only in a given position.

The cassette 206 rotates at constant speed for maintaining the sample liquids thoroughly mixed but is capable of being stopped instantaneously by disengagement of the clutch 203 and locking of the cassette in accurate position in front of a sampling needle 211 by means of the brake 204. This stopping of the rotation of the cassette 206 takes place when a signal from an analysis instrument, with which the sampling apparatus is used, orders an electronic counting mechanism of the sampling apparatus to determine the position of a test tube in question and stop the cassette accordingly. The cassette is stopped for only a short time so that the analysis instrument can suck new sample liquid.

The test tube, from which sampling is to take place, stops directly in front of the sampling needle, which after the lowering of the fixing arm is lowered and perforates the closure of the test tube, and the analysis instrument sucks sample liquid.

Immediately the cassette is stopped, an arm 212 is lowered by means of a pneumatic cylinder 212' to fix the test tube in question in position, and also the sampling needle 211 is lowered by means of a second pneumatic cylinder 208 to thereby perforate the closure 210' of the tube in question. The sampling needle 211 is lowered to a definite position and, after this position has been arrived at, a signal is sent to the analysis instrument which sucks a definite liquid amount, after which the sampling needle 211 is drawn upward, the arm 212 lifted, the brake 204 released, and the clutch 203 engaged which results in the cassette 206 once again starting to rotate.

The pneumatic cylinder 212' controls the movement of the arm 212, which in lowered position has the purpose of fixing the test tube in question. A further purpose of the arm is in raised position to hold a drain cup below the sampling needle when it is being flushed clean.

The second pneumatic cylinder 208 manages the up and down movement of the sampling needle.

An electronic 25-counting mechanism (not shown) with associated screen or code disc 207 is mounted on the axle of the cassette 206 and indicates the number of the test tube located beneath the sampling needle 211. The pneumatic cylinder 208 effects the upward and downward movement of the sampling needle 211 which consists of two narrow tubes 211' and 211". When the needle has been pressed down through the closure of a tube and has arrived at a certain level, the analysis instrument can suck sample liquid through the tube 211'. The tube 211" also penetrates the closure 210' and allows air to enter the test tube in order to prevent a vacuum arising therein which would render the sucking more difficult or slower.

The lower end of the tube 211" penetrates fully through the closure plug of a test tube and terminates within the test tube so that the lower opening of the tube 211" of the immersed sampling needle is entirely free from the closure plug.

The second pneumatic cylinder 212' which effects movement of the arm 212 has two functions, namely (i) to maintain the test tube in position in the cassette when the sampling needle 211 is being drawn out of a rubber plug 210', and (ii) to hold a drain cup below the sampling needle while it is flushed clean. Simultaneously a vacuum suction device is connected to the drain cup for sucking away the mixture of flushing liquid and sample liquid.

When the sample needle 211 has been drawn upwards and the fixing arm 212 is in its upper position, and the brake 204 released, the clutch 203 starts immediately to draw and takes along the cassette which re-assumes its previous speed, that is 18·5 revolutions per minute.

Figure 25 shows how the cassette can be provided with a beveled circumferential surface 214 in which the test tubes are positioned obliquely in the position 215. The mixing then obtained (of settling liquids, for example blood) is considered to be better than that obtained in position 216, and above all better than in position 217. One disadvantage is that the cassette must be designed with a greater thickness. For position 215, the O-ring advantageously lies beneath the mouth of the test-tube holes.

The sampling apparatus described by way of example needl not, of course, be constructed in the way described, but can be varied in several ways, for example a stepping motor with braked rotor can be used in the apparatus of Figures 23 to 25 and/or a sample withdrawn from each container when that container is in an inverted position.

## Claims

1. Apparatus for taking a sample of liquid from each of a plurality of containers (20; 210) comprising a receptacle (25; 206) capable of receiving and holding a plurality of said containers (20; 210) means (50) on the apparatus for receiving and supporting the receptacle (25; 206) and so moving it as to cause the containers held thereon to follow a defined path to a sampling station (100—149; 203, 204, 211, 212, 212', 207, 208) along the path and to be inverted in moving along said path to cause agitation of liquid in the containers (20; 210) means (82; 201) for arresting a container (20; 210) at the sampling station with respect to a sampling means (126; 211) arranged to enter such a container (20; 210) and means (210; 212) for actuating the sampling means (126; 211) to cause it to enter the container (20; 210) and withdraw a sample from the container (20; 210) characterized in that the receptacle (25; 206) is so mounted as to be readily removable from the apparatus, in that the apparatus is for taking a sample of liquid from each of a plurality of containers (20; 210) sealed by a piercable stopper (21; 210') and in that the sampling means (126; 211) is arranged to pierce the stopper (21; 210') of such a container (20; 210).

2. Apparatus as claimed in claim 1, wherein the receptacle is a circular carrier (206) having means (209) for receiving and locating the plurality of containers (210) thereon spaced circumferentially round said carrier (206), and the receiving and supporting means is arranged to rotate the carrier so that the containers move generally in a plane which is at a substantial angle to the horizontal.

3. Apparatus as claimed in claim 2, wherein the said angle is not less than 30°.

4. Apparatus as claimed in claim 2 or claim 3, wherein the carrier (206) is capable of receiving containers (210) which are elongate in shape and have an opening at one end, and so to locate the containers (210) that they lie approximately in a common plane, and, on rotation of the carrier (206), follow a defined path of movement which lies in the said plane.

5. Apparatus as claimed in claim 4, wherein the carrier (206) is such that, when the containers (210) are held on it, they are disposed approximately radially and with the ends with the said openings outermost.

6. Apparatus as claimed in any one of claims 1 to 3, wherein the carrier (206) is arranged to receive containers (210) which are elongate in shape and to locate said containers (210) each at an angle to the general plane of said carrier (206).

7. Apparatus as claimed in any preceding claim, wherein the arrangement is such that when a sample is withdrawn from each container (20; 210) at the sampling station (100—149) that container (20; 210) is in an inverted position.

8. Apparatus for taking a sample of liquid from each of a plurality of containers (20), comprising receptacle means (25) capable of receiving and holding a plurality of said containers (20), means (50) on said apparatus for receiving and supporting the receptacle means (25) and for moving it to cause the containers (20) each to follow a defined path to a sampling station (100—149) along the path and to be inverted moving along the path to cause agitation of the liquid in the containers (20), means (82) for arresting a container (20) with respect to sampling means (126), arranged to enter such a container (20), at the sampling station (100—149) and means for actuating the sampling means (126) to enter the container (20) and withdraw a sample from the container (20), characterized in that the receptacle means (25) comprises a plurality of receptacles (25) each arranged to receive and hold a plurality of the containers (20), in that the receptacles (25) are so mounted as to be readily removable from the apparatus, in that the apparatus is for taking a sample of liquid from each of a plurality of containers (20) sealed by a piercable stopper (21), and in that the sampling means (126) is arranged to pierce the stopper (21) of such a container (20).

9. Apparatus as claimed in claim 8, wherein the arrangement is such that the container (20) at the sampling station (100—149) is in an inverted position when the sample is withdrawn from it.

10. Apparatus as claimed in claim 8 or claim 9, wherein the receptacles (25) are arranged to receive and hold containers (20) in a row side by side, and a carrier (50) is mounted for rotation on the apparatus, wherein the receptacles (25) are so retained on the carrier (50) that the direction in which the row of containers on a receptacle extends is substantially parallel to the axis of rotation of the carrier (50).

11. Apparatus as claimed in claim 10, wherein the sampling means (126) at the sampling station (100—149) is movable with respect to the row of containers (20) on a receptacle (25), to enable the sampling means (126) to withdraw a sample from a desired one of the containers (20).

12. Apparatus as claimed in claim 11, which comprises guide means (103) for the sampling means (126), means (112, 113, 114) for moving the sampling means (126) along said guide means (103) and means (110, 117) for positioning the sampling means with respect to a desired container (20).

13. Apparatus as claimed in claim 12, wherein the guide means (103) comprises a linear guide, which extends in a direction parallel to the axis of rotation of the carrier (50).

14. Apparatus as claimed in claim 12 or claim 13, wherein the positioning means (117) comprises a motor (110) for moving the sampling means (126), position sensitive means (117) sensitive to the relative position of the sampling means (126) and the guide means (103), and control means (CCU) responsive to the position sensitive means (117) for controlling the motor (110).

15. Apparatus as claimed in any one of claims 12 to 14, wherein the sampling means (126) includes a carriage (100, 101, 102) movable along the guide means (103) and arranged to be positioned by the positioning means (110, 117), a sampling probe (126) on the carriage (100, 101, 102), and means (120) on the carriage (100, 101, 102) for advancing the sampling probe (126) into a container (20) for withdrawing a sample therefrom.

16. Apparatus as claimed in claim 15, wherein the probe (126) is hollow and the sample is withdrawn through the intior of the probe (126) by pressure differential established across the interior of the probe (126).

17. Apparatus as claimed in claim 15 or claim 16, which comprises means (136) for cleaning the probe (126) after its withdrawal from the container (20).

18. Apparatus as claimed in claim 17, wherein the cleaning means (136) includes an O-ring (139) through which the probe (126) is drawn to remove liquid from the exterior of the probe (126).

19. Apparatus as claimed in claim 17 or claim 18, wherein the cleaning means (136) includes means (140) for passing flushing liquid through the probe (126).

20. Apparatus as claimed in claims 1 to 19, which comprises means (127) for metering the quantity of the sample withdrawn from a container (20).

21. Apparatus as claimed in claim 20, which comprises means (127) for metering a predetermined volume of the withdrawn sample.

22. Apparatus as claimed in both claims 15 and claim 21, which comprises a metering valve (127) carried on the carriage (100, 101, 102), and flexible control leads (not shown) for the metering valve extending to said carriage (100, 101, 102).

23. Apparatus as claimed in any one of claims 2 and 8 to 22, wherein each receptacle (25) carries identifying means (26) for identifying that receptacle (25), and the apparatus includes means for co-operating with the identifying means (26) on a receptacle (25) in position on the carrier (50) to produce an output identifying that receptacle (25).

24. Apparatus as claimed in claim 23, wherein the output is indicative of a receptacle (25) at the sampling station (100—149).

25. Apparatus as claimed in claim 23 or claim 24, wherein the identifying means (26) on the receptacle (25) comrises position coded metallic means (26).

26. Apparatus as claimed in claims 10 to 25, wherein the arrangement is such that the receptacles (25) are insertible endwise into reaining means (53) on the carrier (50).

27. Apparatus as claimed in claim 26, wherein the retaining means (53) comprises grooved members (53) with retaining flanges (53c, 53d), arranged to co-operate with shaped portions on the receptacle (25).

28. Apparatus as claimed in claim 26 or claim 27, which inludes means (90, 91) for locating a rceptacle (25) in its fully inserted position.

29. Apparatus as claimed in claim 28, wherein the receptacle is spring (91) loaded against stop means (53), to locate it in the fully inserted position.

30. Apparatus as claimed in any one of claims 8 to 29, wherein there is provided a loading station (30, 31) at which the receptacles (25) can be inserted into the carrier (50), the sampling station (100—149) being spaced from the loading station (30, 31) in the direction of movement of said carrier (50).

31. Apparatus as claimed in claim 30, wherein the loading station (30, 31) is arranged to serve also as an unloading station for the receptacles (25).

32. Apparatus as claimed in both claim 10 and either claim 30 or claim 31, wherein the arrangement is such that receptacles (25) are approximately horizontal on loading or unloading at the loading station (30, 31).

33. Apparatus as claimed in claim 30, wherein the arrangement is such that the carrier (50) on moving from the loading station (30, 31) to the sampling station (100—149) rotates through an angle greater than the minimum angle necessary to effect such movement, and in making such movement there is caused inversion of the containers (20) in the receptacle (25), promoting agitation of the liquid in the containers (20).

34. Apparatus as claimed in claim 30, wherein the arrangement is such that, on loading of successive receptacles (25) onto the carrier (50) the receptacles (25) are loaded alternately on approximately opposite sides of the carrier (50), to reduce the imbalance load on the carrier (50).

35. Apparatus as claimed in claims 8 to 35, which is suitable for use with containers (20) bearing a machine-readable identification (not shown) of the container (20), the apparatus including means (BCM) for reading the identification on a container (20) from which a sample is about to be taken.

**Patentansprüche**

1. Vorrichtung zur Entnahme einer Flüssigprobe aus je einem Gefäß einer Anzahl von Gefäßen (20; 210), mit einem Behältnis (25; 206) für die Aufnahme und Halterung einer Anzahl solcher Gefäße (20; 210), Einrichtungen (50) zur Aufnahme und Abstützung des Behältnisses (25; 206) bei dessen Fortbewegung, um die Gefäße auf einer bestimmten Bahn einer Probeentnahmestation (100—149; 203, 204, 211, 212, 212', 207, 208) zuzuführen und in umgekehrter Richtung von dieser wegzuführen, dabei eine Bewegung der in den Gefäßen (20, 210), enthaltenen Flüssigkeit zu bewirken, Einrichtungen (82; 201) zum Anhalten eines Gefäßes (20, 210) in der Probeentnahmestation an einer Probeentnahmeeinrichtung (126, 211), welche so angeordnet ist, daß sie in das Gefäß (20, 210) einführbar ist, sowie Mitteln (120, 212) zur Betätigung der Probeentnahmeeinrichtung (126, 211), um diese in das Gefäß (20; 210) einzuführen und dem Gefäß (20; 210) eine Probe zu entnehmen, dadurch gekennzeichnet, daß das Behältnis (25; 206) so angebracht ist, daß es leicht aus der Vorrichtung entfernbar ist, daß eine Flüssigprobe aus jedem einer Anzahl von Gefäßen (20, 210) entnehmbar ist, welche mittels eines durchdringbaren Stopfens (21, 210') verschlossen sind, und daß die Probeentnahmeeinrichtung (126; 211) so angeordnet ist, daß sie den Stopfen (21, 210') eines solchen Behältnisses (20; 210) durchdringt.

2. Vorrichtung nach Anspruch 1, dadurch gekennzeichnet, daß das Behältnis ein kreisförmiger Träger (206) mit Einrichtungen (209) zur Aufnahme und Lokalisierung der Anzahl von Gefäßen (210) ist, welche um den Umfang des Trägers (206) angeordnet sind, und daß die Aufnahme- und Stützeinrichtung so angeordnet ist, daß der Träger so gedreht wird, daß die Gefäße sich im wesentlichen in einer Ebene bewegen, welche mit der Horizontalen einen erheblichen Winkel bildet.

3. Vorrichtung nach Anspruch 2, dadurch gekennzeichnet, daß der Winkel nicht weniger als 30° beträgt.

4. Vorrichtung nach Anspruch 2 oder 3, dadurch gekennzeichnet, daß der Träger (206) Gefäße (210) aufnehmen kann, welche eine längliche Form besitzen und an einem Ende eine Öffnung aufweisen, sowie daß die Gefäße (210) so einstellbar sind, daß sie sich in etwa in einer gemeinsamen Ebene bebinden und bei Drehung des Trägers (206) einer bestimmten Bewegungsbahn folgen, welche sich in dieser Ebene befindet.

5. Vorrichtung nach Anspruch 4, dadurch gekennzeichnet, daß der Träger (206) ausgelegt ist, daß, wenn die Gefäße (210) auf diesem gehalten werden, sie in etwa radial ausgerichtet sind und ihre Enden mit den Öffnungen außen liegen.

6. Vorrichtung nach den Ansprüchen 1 bis 3, dadurch gekennzeichnet, daß der Träger (206) zur Aufnahme von länglichen Gefäßen (210) und zur Einstellung der Gefäße (210) jeweils in einem Winkel zur allgemeinen Ebene des Trägers (206) ausgelegt ist.

7. Vorrichtung nach einem der vorangehenden Ansprüche, dadurch gekennzeichnet, daß die Anordnung so ausgelegt ist, daß bei der Probeentnahme jeweils aus einem Gefäß (20, 210) in der Probeentnahmestation (100—149) das jeweilige Gefäß (20, 210) sich in umgestürzter Position befindet.

8. Vorrichtung zur Entnahme einer Flüssigprobe aus je einem Gefäß einer Anzahl von Gefäßen (20), mit einem Behältnis (25) für die Aufnahme und Halterung einer Anzahl von Gefäßen (20), Einrichtungen (50) zur Aufnahme und Abstützung des Behältnisses (25) bei dessen Fortbewegung, um jedes der Gefäße (20) auf einer bestimmten Bahn einer Probeentnahmestation (100—149) zuzuführen und dabei zu stürzen, um eine Durchmischung der in den Gefäßen (20) enthaltenen Flüssigkeit zu bewirken, Einrichtungen (82) zum Anhalten eines Gefäßes (20) an der Probeentnahmeeinrichtung (126), welche so angeordnet ist, daß sie in das Gefäß (20) an der Probeentnahmestation (100—149) einführbar ist, sowie Mitteln zur Betätigung der Probeentnahmeeinrichtung (126), um diese in das Gefäß (20) einzuführen und dem Gefäß (20) eine Probe zu entnehmen, dadurch gekennzeichnet, daß mehrere Behältnisse (25) vorhanden sind, welche jeweils für die Aufnahme und Halterung einer Vielzahl von Gefäßen (20) ausgelegt sind, daß die Behältnisse (25) so angebracht sind, daß sie leicht entfernbar sind, daß eine Flüssigprobe aus jedem einer Anzahl von Gefäßen (20) entnehmbar ist, welche mittels eines durchdringbaren Stopfens (21) verschlossen sind, und daß die Probeentnahmeeinrichtung (126) so ausgelegt ist, daß sie den Stopfen (21) eines solchen Gefäßes (20) durchdringt.

9. Vorrichtung nach Anspruch 8, dadurch gekennzeichnet, daß das Gefäß (20) bei der Probeentnahme an der Probeentnahmestation (100—149) sich in umgestürzter Position befindet.

10. Vorrichtung nach Anspruch 8 oder 9, dadurch gekennzeichnet, daß die Behältnisse (25) für die Aufnahme und Halterung der Gefäße (20) in einer Reihe nebeneinander angeordnet sind und ein rotierend antreibbarer Träger (50) vorgesehen ist, wobei die Behältnisse (25) so auf dem Träger (50) gehalten sind, daß die Richtung, in welcher sich eine Gefäße-Reihe in einem Behältnis erstreckt, im wesentlichen parallel zur Drehachse des Trägers (50) verläuft.

11. Vorrichtung nach Anspruch 10, dadurch gekennzeichnet, daß die Probeentnahmeeinrichtung (126) an der Probeentnahmestation (100—149) gegenüber der Reihe der Gefäße (20) in einem Behältnis (25) beweglich ist, um eine Probeentnahme aus einem bestimmten Gefäß (20) durch diese zu ermöglichen.

12. Vorrichtung nach Anspruch 11, gekennzeichnet durch eine Führung (103) für die Probeentnahmeeinrichtung (126), Einrichtungen (112, 113, 114) zum Bewegen der Probeentnahmeeinrichtung (126) entlang dieser Führungseinrichtung (103) und Einrichtungen (110, 117) für die Positionierung des Probeentnahmeeinrichtung gegenüber einem bestimmten Gefäß (20).

13. Vorrichtung nach Anspruch 12, dadurch gekennzeichnet, daß die Führungseinrichtung (103) eine geradlinige Führung umfaßt, welche sich in einer Richtung parallel zur Drehachse des Trägers (50) erstreckt.

14. Vorrichtung nach Anspruch 12 oder 13, dadurch gekennzeichnet, daß die Positionierungseinrichtung (119) eine Motor (110) zum Bewegen der Probeentnahmeeinrichtung (126), die Position erfassende Einrichtungen (119), welche auf die Relativposition der Probeentnahmeeinrichtung (126) und der Führungseinrichtung (103) ansprechen, sowie Steuereinrichtungen (CCU) umfaßt, welche auf die die Position erfassende Einrichtung (119) zur Steuerung des Motors (110) anspricht.

15. Vorrichtung nach einem der Ansprüche 12 bis 14, dadurch gekennzeichnet, daß die Probeentnahmeeinrichtung (126) einen Schlitten (100, 101, 102), welcher der Führungseinrichtung (103) entlang bewegbar und so angeordnet ist, daß er durch die Positionierungseinrichtung (110, 117) positionierbar ist, eine Probeentnahmesonde (126) auf dem Schlitten (100, 101, 102) und Einrichtungen (120) auf dem Schlitten (100, 101, 102) für die Einführung der Sonde (126) in das Gefäß (20) für die Probeentnahme aus diesem umfaßt.

16. Vorrichtung nach Anspruch 15, dadurch gekennzeichnet, daß die Sonde (126) hohle ist und die Probe durch das Innere der Sonde (126) aufgrund Differentialdrucks im Inneren der Sonde (126) abgezogen wird.

17. Vorrichtung nach Anspruch 15 oder 16, mit einer Einrichtung (136) zum Säubern der Sonde (126) nach der Herausnahme aus dem Gefäß (20).

18. Vorrichtung nach Anspruch 17, dadurch gekennzeichnet, daß die Säuberungseinrichtung (136) einen O-Ring (139) umfaßt, durch welchen die Sonde (126) hindurchgeführt wird, um an der Außenseite der Sonde (126) anhaftende Flüssigkeit zu entfernen.

19. Vorrichtung nach Anspruch 17 oder 18, dadurch gekennzeichnet, daß die Säuberungseinrichtung (136) Mittel (140) zum Durchspülen der Sonde (126) umfaßt.

20. Vorrichtung nach den Ansprüchen 1 bis 19, dadurch gekennzeichnet, daß eine Einrichtung (127) zum Messen der aus einem Gefäß (20) abgezogenen Probenmenge vorhanden ist.

21. Vorrichtung nach Anspruch 20, dadurch gekennzeichnet, daß eine Einrichtung (127) zum Messen eines Bestimmten Volumens der abgezogenen Probe vorhanden ist.

22. Vorrichtung nach den Ansprüchen 15 und 21, gekennzeichnet durch ein Meßventil (127) auf dem Schlitten (100, 101, 102) und elastische Steuerleitungen (nicht dargestellt) für das Meßventil, welche sich zu dem Schlitten (100, 101, 102) erstrecken.

23. Vorrichtung nach den Ansprüche 2 und 8 bis 22, dadurch gekennzeichnet, daß in jedem Behältnis (25) Identifizierungseinrichtungen (26) für die Identifizierung dieses Behältnisses (25) vorhanden sind und daß eine Einrichtung vorgesehen ist, welche mit der Identifizierungseinrichtung (26) auf einem auf dem Schlitten (50) positionierten Behältnis (25) zusammenwirkt, um ein das jeweilige Behältnis (25) identifizierendes Signal zu erzeugen.

24. Vorrichtung nach Anspruch 23, dadurch gekennzeichnet, daß das Signal anzeigt, daß das Gehältnis (25) sich in der Probeentnahmestation (100—149) befindet.

25. Vorrichtung nach Anspruch 23 oder 24, dadurch gekennzeichnet, daß die Identifizierungseinrichtung (26) auf dem Behältnis (25) positionskodierte metallische Einrichtungen umfaßt.

26. Vorrichtung nach den Ansprüchen 10 bis 25, dadurch gekennzeichnet, daß die Anordnung so ausgelegt ist, daß die Behältnisse (25) mit ihren Enden in die Halteeinrichtungen (53) auf dem Träger (50) einführbar sind.

27. Vorrichtung nach Anspruch 12, dadurch gekennzeichnet, daß die Halteeinrichtung (53) mit Nuten versehene Elemente (53) mit Halteflanschen (53c, 53d) aufweist, welche so angeordnet sind, daß sie mit geformten Abschnitten an dem Behältnis (25) zusammenwirken.

28. Vorrichtung nach Anspruch 26 oder 27, gekennzeichnet durch Mittel (90, 91) für die Lokalisierung eines Behälters (25) in seiner voll umgestürzten Position.

29. Vorrichtung nach Anspruch 28, dadurch gekennzeichnet, daß das Behältnis durch eine Feder (91) gegen den Anschlag (53) gedrückt wird, um dieses in seiner voll umgestürzten Position zu halten.

30. Vorrichtung nach einem der Ansprüche 8 bis 29, gekennzeichnet durch eine Ladestation (30, 31), an welcher die Behältnisse (25) in den Träger (50) einsetzbar sind, wobei sich die Probeentnahmestation (100—149) von der Ladestation (30, 31) in Bewegungsrichtung des Trägers (50) in einem Abstand befindet.

31. Vorrichtung nach Anspruch 30, dadurch gekennzeichnet, daß die Ladestation (30, 31) auch als Entladestation für die Behältnisse (25) dient.

32. Vorrichtung nach Anspruch 10 sowie entweder Anspruch 30 oder 31, dadurch gekennzeichnet, daß die Anordnung so ist, daß die Behältnisse (25) beim Laden oder Entladen an der Ladestation (30, 31) im wesentlichen horizontal ausgerichtet sind.

33. Vorrichtung nach Anspruch 30, dadurch gekennzeichnet, daß die Anordnung so ist, daß der Träger (50) bei der Bewegung von der Ladestation (30, 31) zur Probenahmestation (100—149) einen Winkel durchläuft, welcher größer ist als der minimale Winkel, welcher für diese Bewegung erforderlich ist, und daß durch diese Bewegung ein Umstürzen der Gefäße (20) in dem Behältnis (25) erfolgt, wodurch eine Durchmischung der in den Gefäßen (20) enthaltenen Flüssigkeit gefördert wird.

34. Vorrichtung nach Anspruch 30, dadurch gekennzeichnet, daß die Anordnung so ist, daß beim Beladen des Trägers (50) mit aufeinanderfolgenden Behältnissen (25) die Behältnisse (25) im Wechsel an in etwa entgegengesetzten Seiten des Trägers (50) eingebracht werden, um ein Ungleichgewicht auf dem Trägers (50) zu verringern.

35. Vorrichtung nach den Ansprüchen 8 bis 35, dadurch gekennzeichnet, daß diese für die Verwendung von Gefäßen (20) geeignet ist, welche eine (nicht dargestellte) maschinell lesbare Identifizierung aufweisen, wobei die Vorrichtung Einrichtungen (BCM) zum Lesen der Identifizierung an einem Behälter (20) aufweist, dem gerade eine Probe entommen werden soll.

**Revendications**

1. Appareil pour prélever un échantillon de liquide de chacun d'un certain nombre de récipients (20; 210) comprenant un réceptacle (25; 206) capable de recevoir et de contenir un certain nombre desdits récipients (20; 210) un moyen (50) sur l'appareil pour recevoir et supporter le réceptacle (25; 206) et ainsi le déplacer afin de forcer les récipients qui y sont contenus à suivre une trajectoire définie vers une station d'échantillonnage (100—149; 203, 204, 211, 212, 212', 207, 208) le long de la trajectoire et à être inversés en passant le long de ladite trajectoire pour provoquer une agitation du liquide dans les récipients (20; 210), un moyen (82; 201) pour arrêter un récipient (20; 210) à la station d'échantillonnage par rapport à un moyen d'échantillonnage (126; 211) agencé pour entrer dans un tel récipient (20; 210) et un moyen (120; 212) pour actionner ledit moyen d'échantillonnage (126; 211) pour le forcer à entrer dans le récipient (20; 210) et retirer un échantillon du récipient (20; 210); caractérisé en ce que le réceptacle (25; 206) est monté de façon à être facilement amovible de l'appareil, en ce que l'appareil est prévu pour prélever un échantillon de luiquide de chacun d'un certain nombre de récipients (20; 210) obturés par un bouchon perforable (21; 210') et en ce que le moyen d'échantillonnage (126; 211) est agencé pour perforer le bouchon (21; 210') d'un tel récipient (20, 211).

2. Appareil selon la revendication 1, où le réceptacle est un support circulaire (206) ayant un moyen (209) pour recevoir et localiser la quantité de récipients (210), circonférentiellement espacés autour dudit support (206) et le moyen de réception et de support est agencé pour faire tourner le support de façon que les récipients se déplacent généralement dans un plan qui est à un angle sensible avec l'horizontale.

3. Appareil selon la revendication 2, où ledit angle n'est pas inférieur à 30°.

4. Appareil selon la revendication 1 ou la revendication 2, où le support (206) peut recevoir des récipients (210) qui sont de forme allongée et ont une ouverture à une extrémité et ainsi localiser les récipients (210) de façon qu'ils se trouvent à peu près dans un plan commun et, lors de la rotation du support (206), qu'ils suivent une trajectoire définie de mouvement qui se trouve dans ledit plan.

5. Appareil selon la revendication 4, où le support (206) est tel que, lorsque les récipients (210) y sont maintenus, ils soient disposés à peu près radialement et avec les extrémités avec lesdites ouvertures vers l'extérieur.

6. Appareil selon l'une quelconque des revendications 1 à 3, où le support (206) est agencé pour recevoir des récipients (210) qui sont de forme allongée et pour localiser lesdits récipients (210) chacun à un angle par rapport au plan général dudit support (206).

7. Appareil selon l'une des revendications précédentes, où l'agencement est tel que lorsqu'un échantillon est retiré de chaque récipient (20; 210) à la station d'échantillonnage (100—149), ce récipient (20; 210) soit en position inversée.

8. Appareil pour prélever un échantillon de liquide de chacun d'un certaine nombre de récipients (20), comprenant un moyen formant réceptacle (25) pour recevoir et contenir un certain nombre desdits récipients (20), un moyen (50) sur ledit appareil pour recevoir et supporter le moyen formant réceptacle (25) et pour le déplacer pour forcer les récipients (20) à suivre une trajectoire définie vers une station d'échantillonnage (100—149) le long de la trajectoire et à être inversés en passant le long de la trajectoire pour provoquer une agitation du liquide dans les récipients (20), un moyen (82) pour arrêter un récipient (20) par rapport à un moyen d'échantillonnage (126), agencé pour entrer dans un tel récipient (20), à la station d'échantillonnage (100—149) et un moyen pour actionner le moyen d'échantillonnage (126) pour entrer dans le récipient (20) et retirer un échantillon du récipient (20), caractérisé en ce que le moyen formant réceptacle (25) comprend un certain nombre de réceptacles (25) chacun étant agencé pour recevoir et contenir un certain des récipients (20), en ce que les réceptacles (25) sont montés de façon à être facilement amovibles de l'appareil, en ce que l'appareil est prévu pour prélever un échantillon de liquide de chacun d'un certain nombre de récipients (20), obturés par un bouchon perforable (21) et en ce que le moyen d'échantillonnage (126) est agencé pour perforer le bouchon (21) d'un tel récipient (20).

9. Appareil selon la revendication 8, où l'agencement est tel que le récipient (20) à la station d'échantillonnage (100—149) soit à une position inversée lorsque l'échantillon en est retiré.

10. Appareil selon la revendication 8 ou la revendication 9, où les réceptacles (25) sont agencés pour recevoir et contenir des récipients (20) en une rangée côte à côte, et un support (50) est monté pour une rotation sur l'appareil, où les réceptacles (25) sont retenus sur le support (50) de façon que la direction dans laquelle la rangée de récipients dans un réceptacle s'étend soit sensiblement parallèles à l'axe de rotation du support (50).

11. Appareil selon la revendication 10, où le moyen d'échantillonnage (126) à la station d'échantillonnage (100—149) est mobile par rapport à la rangée de récipients (20) sur un réceptacle (25) pour permettre au moyen d'échantillonnage (126) de retirer un échantillon de l'un des récipients (20).

12. Appareil selon la revendication 11, qui comprend un moyen de guidage (103) pour le moyen d'échantillonnage (126), un moyen (112, 113, 114) pour déplacer le moyen d'échantillonnage (126) le long dudit moyen de guidage (103) et un moyen (110, 117) pour placer le moyen d'échantillonnage par rapport à un récipient souhaité (20).

13. Appareil selon la revendication 12, où le moyen de guidage (103) comprend un guidage linéaire qui s'étend dans une direction parallèle à l'axe de rotation du support (50).

14. Appareil selon la revendication 12 ou la revendication 13, où le moyen de positionnement (117) comprend un moteur (110) pour déplacer le moyen d'échantillonnage (126), un moyen (117) sensible à la position, sensible à la position relative du moyen d'échantillonnage (126) et du moyen de guidage (103) et un moyen de commande (CCU) répondant au moyen (117) sensible à la position pour contrôler le moteur (110).

15. Appareil selon l'une quelconque des revendications 12 à 14, où le moyen d'échantillonnage (126) comprend un chariot (100, 101, 102) mobile le long du moyen de guidage (103) et agencé pour être placé par le moyen de positionnement (110, 117), une sonde d'échantillonnage (126) sur le chariot (100, 101, 102) et un moyen (120) sur le chariot (100, 101, 102) pour faire avancer la sonde d'échantillonnage (126) dans le récipient (20) pour en retirer en échantillon.

16. Appareil selon la revendication 15, où la sonde (126) est creuse et l'échantillon est retiré à travers l'intérieur de la sonde (126) par la différence de pression établie à l'intérieur de la sonde (126).

17. Appareil selon la revendication 15 ou la revendication 16, qui comprend un moyen (136) pour nettoyer la sonde (126) après son retrait du récipient (20).

18. Appareil selon la revendication 17, où le moyen de nettoyage (136) comprend un joint torique (139) à travers lequel la sonde (126) est tirée pour retirer du liquide de l'extérieur de la sonde (126).

19. Appareil selon la revendication 17 ou la revendication 18, où le moyen de nettoyage (136) comprend un moyen (140) pour le passage d'un liquide de rinçage à travers la sonde (126).

20. Appareil selon les revendications 1 à 19, qui comprend un moyen (127) pour doser la quantité de l'échantillon retiré d'un récipient (20).

21. Appareil selon la revendication 20, qui comprend un moyen (127) pour doser un volume prédéterminé de l'échantillon retiré.

22. Appareil selon la revendication 25 et la revendication 21, qui comprend une vanne de dosage (127) portée sur le chariot (100, 101, 102), et des conducteurs flexibles de commande (non représentés) pour la vanne de dosage qui s'étendent jusqu'audit chariot (100, 101, 102).

23. Appareil selon l'une quelconque des revendications 2 et 8 à 22, où chaque réceptacle (25) porte un moyen d'identification (26) pour identifier le réceptacle (25) porte un moyen d'identification (26) pour identifier le réceptacle (25) et l'appareil comprend un moyen pour coopérer avec le moyen d'identification (26) sur un réceptacle (25) en position sur le support (50) pour produire une sortie identifiant ce réceptacle (25).

24. Appareil selon la revendication 23, où la sortie indique un réceptacle (25) à la station d'échantillonnage (100—149).

25. Appareil selon la revendication 23 ou la revendication (24) où le moyen d'identification (26) sur le réceptacle (25) comprend un moyen métallique codé en position (26).

26. Appareil selon les revendications 10 à 25, où l'agencement est tel que les réceptacles (25) puissent être insérés bout à bout dans un moyen de retenue (53) sur le support (50).

27. Appareil selon la revendication 26, où le moyen de retenue (53) comprend des organes à gorge (53) avec des brides de retenue (53c, 53d) agencés pour coopérer avec des parties en forme sur le réceptacle (25).

28. Appareil selon la revendication 26 ou la revendication 27 qui comprend un moyen (90, 91) pour localiser un réceptacle (25) à sa position totalement insérée.

29. Appareil selon la revendication 28, où le réceptacle est chargé par ressort (91) contre un moyen formant butée (53) pour le localiser à sa position totalement insérée.

30. Appareil selon l'une quelconque des revendications 8 à 29, où un prévoit une station de chargement (30, 31) à laquelle les réceptacles (25) peuvent être insérés dans le support (50), la station d'échantillonnage (100—149) étant espacée de la station de chargement (30, 31) dans la direction du mouvement dudit support (50).

31. Appareil selon la revendication 30, où la station de chargement (30, 31) est agencée pour servir également de station de déchargement pour les réceptacles (25).

32. Appareil selon la revendication 10 et la revendication 30 ou 31, où l'agencement est tel que les réceptacles (25) soient à peu horizontaux au chargement ou au déchargement à la station de chargement (30, 31).

33. Appareil selon la revendication 30, où l'agencement est tel que le support (50) lors du déplacement de la station de chargement (30, 31) à la station d'échantillonnage (100—149) tourne sur un angle supérieur à l'angle minimum nécessaire pour effectuer ce mouvement et en affectuant ce mouvement, cela provoque une inversion des récipients (20) dans le réceptacle (25), favorisant l'agitation du liquide dans les récipients (20).

34. Appareil selon la revendication 30, où l'agencement est tel que, au chargement de réceptacles successifs (25) sur le support (50), les réceptacles (25) soient chargés alternativement sur des côtés à peu près opposés du support (50) pour réduire la charge de déséquilibre sur le support (50).

35. Appareil selon les revendications 8 à 35, qui est approprié à une utilisation avec des récipients (20) portant une identification (non représentée), lisible à la machine, du récipient (20), l'appareil comprenant un moyen (BCM) pour lire l'identification sur un récipient (20) d'où un échantillon est sur le point d'être prélevé.

FIG. 1.

FIG. 5.

FIG. 4.

0 061 317

FIG. 2.

FIG. 3.

FIG. 6.

FIG. 7.

0 061 317

*41*

*93*

*104*

*106*  *108*

*100a*

*100*

*102*

*116*  *113*

*112*

*103*  *101*

*110*

*76*

FIG. 8.

FIG. 9.

FIG. IO.

0 061 317

FIG. 11A

41
66
64b
64c
64
64a
69
68

90c
90b
90a
90
92
52
57a
62
91
57
61
58
60
53
51
63
56

FIG. 11.

65a
70
65
40
71
72

FIG. 11B

FIG. 12.

FIG. 13.

FIG. 14.

*Fig.15.*

104b 104b 104b 104b 104b 104b

104

*Fig.16.*

17

17

104b 104b 104b 104b 104b

104

*Fig.17.*

104

104b

104a

*Fig.18.*

117

104b

104

104a

0 061 317

FIG. 19.

FIG. 20.

FIG. 21.

FIG. 22.

ISOTON 5ml 10ml

ISOTON 10ml

126

160

150

152

164

154

163

162

155

153

172

157

165

151

159

158

166

173

167

171

161

168

156

159

170

TO WASTE

5ml PUMP

2·2ml PUMP

TO WASTE

TO WASTE

0 061 317

13

FIG. 23.

211″ — 211
210′
211′
209
210
208
206′
206
222
223

FIG. 24.

215 216
217
218
214

FIG. 25.